# EUROPEAN PATENT SPECIFICATION

(11) **EP 4 068 043 B1**
(45) Date of publication and mention of the grant of the patent: **27.08.2025**
(21) Application number: 20896409.8
(22) Date of filing: 26.11.2020
(51) Int. Cl.: G06F 1/16, G06F 3/0484, G06F 3/14, G09F 9/30

(54) **FOLDABLE ELECTRONIC DEVICE COMPRISING CAMERA**
FALTBARE ELEKTRONISCHE VORRICHTUNG MIT KAMERA
DISPOSITIF ÉLECTRONIQUE PLIABLE COMPRENANT UNE CAMÉRA

(30) Priority: 02.12.2019 KR 20190158400
(43) Date of publication of application: 05.10.2022
(60) Divisional application: 24183509.9
(73) Proprietor: Samsung Electronics Co., Ltd., Suwon-si, Gyeonggi-do 16677 (KR)
(72) Inventor: KOO, Jaok, Suwon-si, Gyeonggi-do 16677 (KR); NA, Suhyun, Suwon-si, Gyeonggi-do 16677 (KR); LEE, Jangwoo, Suwon-si, Gyeonggi-do 16677 (KR); LEE, Haneul, Suwon-si, Gyeonggi-do 16677 (KR); JOUNG, Soonchun, Suwon-si, Gyeonggi-do 16677 (KR); JIN, Sunmi, Suwon-si, Gyeonggi-do 16677 (KR)
(74) Representative: HGF
(86) International application number: PCT/KR2020/016929
(87) International publication number: WO 2021/112490

(56) References cited:
- CN-A- 110 381 282
- CN-A- 110 389 802
- KR-A- 20100 081 821
- KR-A- 20140 115 913
- KR-A- 20170 079 545
- KR-A- 20190 089 293
- US-A1- 2016 050 408
- US-A1- 2017 293 383
- US-A1- 2019 339 745

## Description

### [Technical Field]

Various embodiments of the present disclosure relate to a foldable electronic device including a camera.

### [Background Art]

In recent years, with the development of social media, consumers' demands for taking high-quality photos or videos using mobile electronic devices are increasing.

In response to these consumers' demands, it is becoming a key trend of the market for the mobile electronic devices to be equipped with cameras supporting various functions and high picture quality (pixels).

On the other hand, foldable electronic devices recently started to be released are generally released as high-price products, so high-performance / high-definition cameras are also adopted as cameras mounted on the foldable electronic devices.

CN 110381282A relates to a video call display method applied to an electronic device.

CN 110389802A relates to a display method of a flexible screen and electronic equipment rearranging each control in a display interface according to the physical state of the flexible screen, so that a user can obtain better experience when watching and using the flexible screen.

US 2016/0050408A1 relates to a foldable display device detecting that a second body or a third body is folded to a first body and capturing an image by at least one of a first camera unit located in the second body and a second camera unit located in the third body.

US 2017/0293383A1 relates to a foldable display device displaying a preview image in response to a folded state of the display device.

### [Disclosure of Invention]

### [Technical Problem]

Since a typical bar-type electronic device has a camera arranged to face a display, it may be difficult for a user who uses the camera to take pictures and videos at various angles. The reason is that, in case of a low-angle shot in which the camera looks down from the top or a high-angle shot in which the camera looks up from the bottom, because the display is not visible to the user according to a height of the electronic device, it is difficult for the user to check a preview image, and it is also difficult to handle the camera through the display.

### [Solution to Problem]

The invention is defined by the independent claims. Further aspects of the invention are outlined in the dependent claims. When the term "embodiment" is used for describing an unclaimed combination of features, it has to be understood as referring to examples useful for understanding the present invention. An electronic device of an embodiment may include a housing including a plurality of parts and at least one hinge structure connecting the plurality of parts, a first hinge structure among the at least one hinge structure being arranged between a first part and a second part among the plurality of parts and connecting the first part to the second part, a first sensor arranged in the first part, a second sensor arranged in the second part, a display arranged in a space formed by the housing and bendable according to respective angles formed by the plurality of parts, a first camera arranged on a surface, which faces the display, of the first part, and at least one processor electrically connected to the first sensor, the second sensor, the display, and the first camera. The at least one processor may be configured to execute a camera application associated with the first camera, and identify the positioning of the first part, based on a value acquired by the first sensor, and identify the positioning of the second part, based on a value acquired by the second sensor, and identify an angle formed by the first part and the second part, based on the identified positioning of the first part and the identified positioning of the second part, and when the angle is within a first specified angle range, display a preview image acquired by the first camera in a second display region corresponding to the second part among a display region of the display, and when the angle is within a second specified angle range, display the preview image in a first display region corresponding to the first part and the second display region among the display region of the display, and display a user interface (UI) of the camera application through the display.

An electronic device of an embodiment may include a housing including a first part, a second part, a third part, a first hinge structure connecting the first part and the second part, and a second hinge structure connecting the second part and the third part, at least one sensor arranged within the housing, a flexible display arranged in a space formed by the housing, a first camera arranged on a surface, which faces the flexible display, of the first part, a second camera arranged on a surface, on which the flexible display is arranged, of the third part, and at least one processor electrically connected to the at least one sensor, the display, the first camera, and the second camera. The at least one processor may be configured to execute a camera application associated with the first camera, and identify whether an angle formed by the second part and the third part is within a first specified angle range, based on a value acquired by the at least one sensor, and recognize a face of a user of the electronic device through the second camera, and after the recognition, compare a face included in an image acquired through the second camera and the recognized user's face, thereby tracking the user's face, and display a preview image acquired by the first camera in a region of the display corresponding to the third part, based on the identifying and the tracking, and display a user interface (UI) of the camera application to overlap with the preview image in the region of the display.

### [Advantageous Effects of Invention]

According to embodiments of the present disclosure, an electronic device capable of conveniently taking a picture at an angle desired by a user by variously displaying a preview image and a user interface (UI) of a camera application according to the positioning of the foldable electronic device may be presented.

According to embodiments of the present disclosure, even if an electronic device is positioned higher than a user's eye level or is positioned lower than the user's eye level, the electronic device may display a preview image of a camera and a UI related to a camera application in a display region of a flexible display that is bendable toward a user.

According to embodiments of the present disclosure, an electronic device may display a UI indicating that a direction that a camera faces is perpendicular to the ground, on a flexible display.

### [Brief Description of Drawings]

FIG. 1 is a block diagram of an electronic device in a network environment according to an embodiment.
FIG. 2 illustrates an electronic device according to an embodiment.
FIG. 3 illustrates an execution screen of an application related to a camera module according to an embodiment.
FIG. 4 illustrates an example in which an electronic device operates in a first mode according to an embodiment.
FIG. 5 illustrates another example in which an electronic device operates in a first mode according to an embodiment.
FIG. 6 illustrates an example in which an electronic device operates in a second mode according to an embodiment.
FIG. 7 illustrates an example in which an electronic device operates in a third mode according to an embodiment.
FIG. 8 is a flowchart illustrating a method in which an electronic device operates in a first mode to a third mode according to an embodiment.
FIG. 9 illustrates an electronic device according to another embodiment.
FIG. 10 illustrates a folded state of an electronic device according to an embodiment.
FIG. 11 illustrates a method for recognizing a user's face in an electronic device according to an embodiment.
FIG. 12 illustrates an example in which an electronic device operates in a first mode according to an embodiment.
FIG. 13 illustrates an example in which an electronic device operates in a second mode according to an embodiment.
FIG. 14 illustrates an example in which an electronic device operates in a third mode according to an embodiment.
FIG. 15 illustrates an example in which an electronic device operates in a fourth mode according to an embodiment.
FIG. 16 illustrates an example in which an electronic device operates in a fifth mode according to an embodiment.
FIG. 17 illustrates an example in which an electronic device operates in a sixth mode according to an embodiment.
FIG. 18 illustrates an example in which an electronic device operates in a seventh mode according to an embodiment.
FIG. 19 is a flowchart illustrating a method in which an electronic device operates in a first mode to a fourth mode according to an embodiment.
FIG. 20 is a flowchart illustrating a method in which an electronic device operates in a fifth mode to a seventh mode according to an embodiment.
FIG. 21 illustrates an example in which an electronic device displays a preview image acquired by a second camera according to an embodiment.
FIG. 22 illustrates an example in which an electronic device corrects an image acquired by a second camera and displays a preview image according to an embodiment.

### [Mode for Carrying out the Invention]

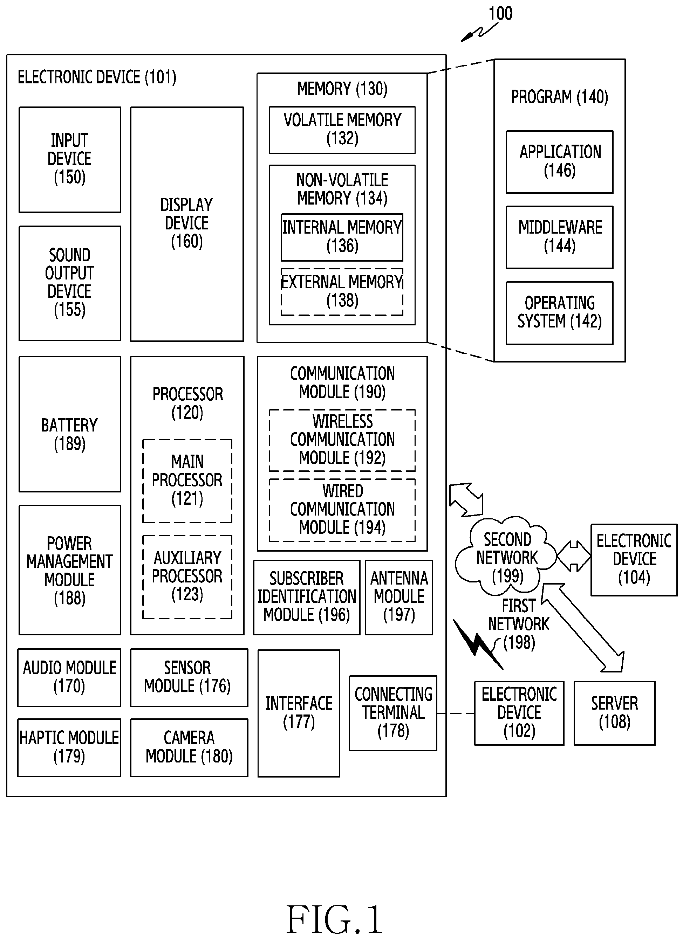

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input device 150, a sound output device 155, a display device 160, an audio module 170, a sensor module 176, an interface 177, a haptic module 179, a camera module 180, a power management module 188, a battery 189, a communication module 190, a subscriber identification module(SIM) 196, or an antenna module 197. In some embodiments, at least one (e.g., the display device 160 or the camera module 180) of the components may be omitted from the electronic device 101, or one or more other components may be added in the electronic device 101. In some embodiments, some of the components may be implemented as single integrated circuitry. For example, the sensor module 176 (e.g., a fingerprint sensor, an iris sensor, or an illuminance sensor) may be implemented as embedded in the display device 160 (e.g., a display).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may load a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), and an auxiliary processor 123 (e.g., a graphics processing unit (GPU), an image signal processor (ISP), a sensor hub processor, or a communication processor (CP)) that is operable independently from, or in conjunction with, the main processor 121. Additionally or alternatively, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display device 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input device 150 may receive a command or data to be used by other component (e.g., the processor 120) of the electronic device 101, from the outside (e.g., a user) of the electronic device 101. The input device 150 may include, for example, a microphone, a mouse, a keyboard, or a digital pen (e.g., a stylus pen).

The sound output device 155 may output sound signals to the outside of the electronic device 101. The sound output device 155 may include, for example, a speaker or a receiver. The speaker may be used for general purposes, such as playing multimedia or playing record, and the receiver may be used for an incoming calls. According to an embodiment, the receiver may be implemented as separate from, or as part of the speaker.

The display device 160 may visually provide information to the outside (e.g., a user) of the electronic device 101. The display device 160 may include, for example, a display, a hologram device, or a projector and control circuitry to control a corresponding one of the display, hologram device, and projector. According to an embodiment, the display device 160 may include touch circuitry adapted to detect a touch, or sensor circuitry (e.g., a pressure sensor) adapted to measure the intensity of force incurred by the touch.

The audio module 170 may convert a sound into an electrical signal and vice versa. According to an embodiment, the audio module 170 may obtain the sound via the input device 150, or output the sound via the sound output device 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a cellular network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., PCB). According to an embodiment, the antenna module 197 may include a plurality of antennas. In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 and 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, or client-server computing technology may be used, for example.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101) . For example, a processor(e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

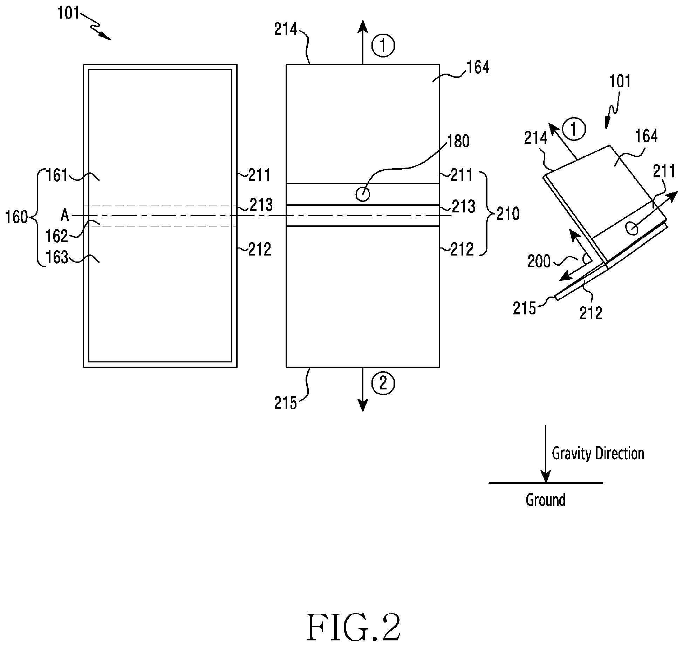

FIG. 2 illustrates an electronic device 101 according to an embodiment. Referring to FIG. 2, the electronic device 101 of an embodiment may include a housing 210, a flexible display 160, an auxiliary display 164, and a camera module 180. The electronic device 101 of an embodiment may include at least some of the components shown in FIG. 1, not shown in FIG. 2.

In the following embodiment, when the electronic device 101 of a fully unfolded state is viewed from the outside, a surface on which the flexible display 160 is visible is defined as a front surface of the electronic device 101, and a surface facing the front surface is defined as a rear surface of the electronic device 101.

In an embodiment, the housing 210 may include a first part 211, a second part 212, and a connection part 213.

In an embodiment, the first part 211 and the second part 212 may be arranged to face each other about the connection part 213. For example, the first part 211 may be arranged in contact with one side of the connection part 213, and the second part 212 may be arranged in contact with the other side of the connection part 213 facing the one side. In an embodiment, the first part 211 and the second part 212 may be coupled to the connection part 213, and may rotate about the connection part 213 (or a folding axis (A)). In an embodiment, the first part 211 may be connected to the second part 212 through the connection part 213.

In an embodiment, the connection part 213 may be arranged between the first part 211 and the second part 212. In an embodiment, various mechanisms may be applied to the connection part 213 wherein the first part 211 and the second part 212 may perform a rotation operation. For example, the connection part 213 may include a hinge structure including a plurality of gears, but is not limited thereto. For example, the connection part 213 may have a multi-joint structure.

In another embodiment, the connection part 213 may be formed integrally with the first part 211 and the second part 212 as well. In this case, a portion of the connection part 213 may be integrally formed with the first part 211 or the second part 212, and the remaining portion is integrally formed with the second part 212 or the first part 211. In another embodiment, the connection part 213 may be integrally formed with the first part 211 or the second part 212 as well. In further embodiment, all of the first part 211, the second part 212, and the connection part 213 may be integrally formed as well.

The housing 210 of an embodiment may include a metal and/or a polymer.

In an embodiment, the flexible display 160 may be arranged in a space formed by the housing 210 and be seen from the outside of the electronic device 101. For example, a portion of the flexible display 160 may be accommodated in the space formed by the housing 210, and the remaining portion may be exposed to the outside.

In an embodiment, the flexible display 160 may be bent according to a folding operation of the housing 210. For example, the flexible display 160 may be bent at an angle corresponding to an angle formed by the first part 211 and the second part 212.

In an embodiment, the flexible display 160 may form at least a portion of the front surface of the electronic device 101. For example, most of the front surface of the electronic device 160 may be formed by the flexible display 160, and the remaining portion may be formed by the housing 210 surrounding the flexible display 160. For another example, the entire front surface of the electronic device 160 may be formed by the flexible display 160.

In an embodiment, the flexible display 160 may include a first display region 161 corresponding to the first part 211, a second display region 162 corresponding to the second part 212, and a third display region 163 corresponding to the connection part 213. Unlike the above description, the division of the display region of the flexible display 160 may be defined by other criteria as well. For example, a region extending toward the first part 211 with respect to a folding axis (A) may be defined as the first display region, and a region extending toward the second part 212 with respect to the folding axis (A) may be defined as the second display region as well. In this case, a portion of the third display region 163 illustrated in FIG. 2 may be included in the first display region 161, and the remaining portion of the third display region 163 may be included in the second display region 162. In this case, the first display region 161 and the second display region 162 defined with respect to the folding axis (A) may be seamlessly connected without being separated by the third display region 163.

Below, a description will be made with reference to the first display region 161 extending toward the first part 211 and the second display region 162 extending toward the second part 212 about the folding axis (A) with the exception of the third display region 163.

In an embodiment, at least a portion of the auxiliary display 164 may be accommodated and arranged in a space formed by the first part 211. In an embodiment, the auxiliary display 164 may be seen through a rear surface of the first part 211. The electronic device 101 of another embodiment may not include the auxiliary display 164, or may further include an additional auxiliary display in another region.

In an embodiment, the camera module 180 may be arranged on a surface, which faces the flexible display 160, of the first part 211. For example, at least a portion of the camera module 180 may be inserted into an opening formed in the rear surface of the first part 211 and be arranged. In an embodiment, the camera module 180 may be arranged between the auxiliary display 164 and the connection part 213. In another embodiment, when the electronic device 101 does not include the auxiliary display 164, the camera module 180 may be arranged to be spaced apart from the connection part 213.

In an embodiment, the camera module 180 may acquire an image through the opening.

In an embodiment, the first part 211 and the second part 212 may form an angle 200 according to a folding operation of the housing 210. Since an angle at which the flexible display 160 is bent corresponds to the angle formed by the first part 211 and the second part 212 of the housing 210, the first display region 161 and the second display region 162 of the flexible display 160 may also form the angle 200 according to the folding operation of the housing 210.

In an embodiment, when the electronic device 101 is in an unfolded state (or a flat state), the angle 200 formed by the first part 211 and the second part 212 may be about 180°. In this case, the first display region 161 and the second display region 162 of the flexible display 160 may substantially form one plane.

In an embodiment, when the electronic device 101 is in a folded state, the angle 200 formed by the first part 211 and the second part 212 may be greater than or equal to 0° and less than 180°. As the electronic device 101 is folded, the first part 211 and the second part 212 may be overlapped with each other. In an embodiment, when the electronic device 101 is in a fully folded state, at least a portion of the first display region 161 may be in contact with or adjacent to the second display region 162.

In an embodiment, the processor 120 of the electronic device 101 may identify the angle 200 formed by the housing 210. For example, the processor 120 may identify an angle formed by the first part 211 and the second part 212 by using the sensor module 176.

In an embodiment, the processor 120 may identify a direction that the first part 211 and/or the second part 212 face by using the sensor module 176. For example, the processor 120 may identify whether a direction that the first part 211 and/or the second part 212 face is the direction of gravity or a direction opposite to gravity, by using the sensor module 176. The processor 120 may identify whether the first part 211 and/or the second part 212 face the ground by using the sensor module 176. The direction that the first part 211 faces may be a direction (e.g., direction ①) that a side surface 214 of the first part 211 positioned opposite the connection part 213 faces. The direction that the second part 212 faces may be a direction (e.g., direction ②) that a side surface 215 of the second part 212 positioned opposite the connection part 213 faces.

Below, a description will be made for an example in which the processor 120 detects the positioning of the first part 211 and the second part 212 by using the sensor module 176, and identifies an angle formed by the first part 211 and the second part 212 and a direction that the first part 211 and the second part 212 each face, based on the detected positioning.

In an embodiment, the sensor module 176 may include a plurality of sensors. For example, the sensor module 176 may include a first sensor arranged in the first part 211 and a second sensor arranged in the second part 212.

The first sensor may include an acceleration sensor and a geomagnetic sensor. When the first sensor includes all of the acceleration sensor and the geomagnetic sensor, the first sensor may further include a position sensor.

In an embodiment, the acceleration sensor of the first sensor may detect x-axis, y-axis, and z-axis accelerations of the first part 211, respectively. In an embodiment, the geomagnetic sensor of the first sensor may detect an intensity of an x-axis, y-axis, and z-axis geomagnetic field of the first part 211, respectively. In an embodiment, the position sensor of the first sensor may determine angles at which the first part 211 is rotated with respect to x-axis, y-axis, and z-axis, based on a value acquired by the acceleration sensor and the geomagnetic sensor.

The angle at which the first part 211 is rotated with respect to x-axis may be, for example, an inclination angle of the first part 211. The inclination angle of the first part 211 may be, for example, an angle formed by a plane parallel to the first display region 161 of the first part 211 and a plane parallel to the ground. In a state in which the first part 211 is placed parallel to the ground, when the side surface 214 is rotated to approach the ground, the inclination angle may be positive, and when the side surface 214 is rotated away from the ground, the inclination angle is negative. In an embodiment, when the inclination angle is positive, the processor 120 may determine that the first part 211 faces the direction of gravity, and when the inclination angle is negative, the processor 120 may determine that the first part 211 faces a direction opposite to gravity. When the inclination angle is positive, the processor 120 may determine that the first part 211 faces the ground, and when the inclination angle is negative, the processor 120 may determine that the first part 211 does not face the ground.

The angle at which the first part 211 is rotated with respect to y-axis may be, for example, a roll angle of the first part 211. The roll angle of the first part 211 may be, for example, an angle between a plane perpendicular to the first part 211 and a plane perpendicular to the ground. In a specific example, when a user holds and tilts the first part 211 to the left in a state where the side surface 214 is farthest away, the roll angle may be positive, and when the user tilts the first part 211 to the right, the roll angle may be negative.

The angle at which the first part 211 is rotated with respect to z-axis may be, for example, the azimuth angle of the first part 211. The azimuth angle of the first part 211 may be an angle between a direction that the side surface 214 of the first part 211 faces and magnetic north. When the side surface 214 of the first part 211 faces magnetic north, the azimuth angle may be 0°.

The above-described principle of identifying the direction of the first part 211 by using the first sensor may be equally applied even to the second part 212. The second part 212 may include a second sensor corresponding to the first sensor.

In another embodiment, the geomagnetic sensor may be replaced with a gyro sensor.

The above-described acceleration sensor, geomagnetic sensor, and gyro sensor may be implemented in hardware, and the position sensor may be implemented in hardware or software.

In another embodiment, the position sensor may be included in the processor 12 as well.

In an embodiment, the processor 120 may identify an angle formed by the first part 211 and the second part 212, based on the positioning of the first part 211 and the positioning of the second part 212 identified using the sensor module 176. However, a method of detecting the positioning of the first part 211 and the second part 212 by the processor 120 and/or a method of identifying the angle formed by the first part 211 and the second part 212 are not limited to the above-described example, and various methods used in the art may be applied. The construction of the sensor module 176 may also vary according to the method of identifying the positioning of the first part 211 and the second part 212 by the processor 120.

In an embodiment, the processor 120 may determine the positioning of the electronic device 101, for example, relative positions of the first part 211 and the second part 212, based on a value acquired by the sensor module 176. In an embodiment, the processor 120 may determine whether the first part 211 is positioned relatively higher or lower than the second part 212. In an embodiment, a case where the first part 211 is positioned relatively lower than the second part 212 may be a case where the first part 211 is closer to the ground than the second part 212. In an embodiment, a case where the first part 211 is positioned relatively lower than the second part 212 may be a case where the side surface 214 of the first part 211 is closer to the ground than the side surface 215 of the second part 212.

In an embodiment, the processor 120 may identify a relative distance in which the first part 211 and the second part 212 are distant from the ground, based on a value acquired by the sensor module 176. For example, the processor 120 may identify that the first part 211 is positioned closer to or positioned farther from the ground than the second part 212 by using the sensor module 176. For example, the processor 120 may determine whether the side surface 214 of the first part 211 is positioned closer to the ground than the side surface 215 of the second part 212 by using the sensor module 176.

In an embodiment, the side surface 214 of the first part 211 may be positioned opposite the connection part 213. For example, the side surface 214 of the first part 211 may be an edge farthest from the connection part 213 among edges of the first part 211.

In an embodiment, the side surface 215 of the second part 212 may be positioned opposite the connection part 213. For example, the side surface 215 of the second part 212 may be an edge farthest from the connection part 213 among edges of the second part 212.

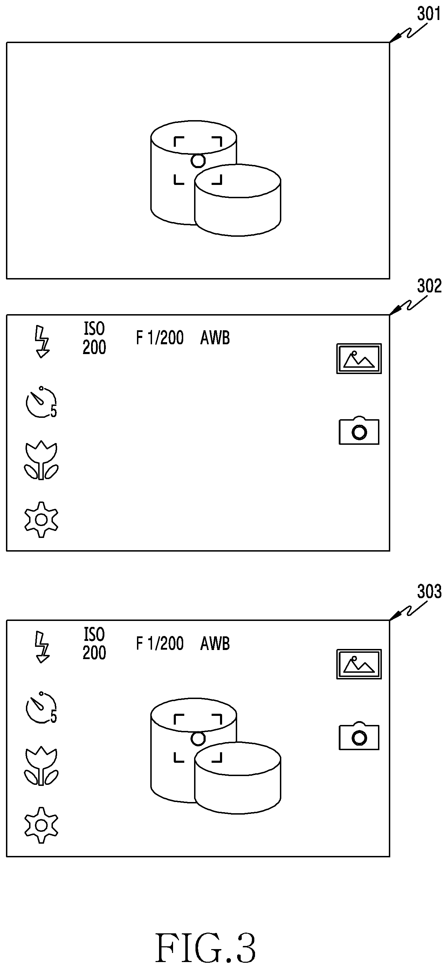

FIG. 3 illustrates an execution screen of an application related to the camera module 180 according to an embodiment.

Referring to FIG. 3, the execution screen of the application related to the camera module 180 of an embodiment may include a preview screen 301, a control screen 302, and a combined screen 303.

In an embodiment, the electronic device 101 (or the processor 120) may display the preview screen 301 and the control screen 302 on the flexible display 160, or may display the combined screen 303 in which the preview screen 301 and the control screen 302 is overlapped, on the flexible display 160.

In an embodiment, the preview screen 301 may include a preview image of the camera module 180. The electronic device 101 (or the processor 120) may acquire a preview image, based on at least a portion of an image acquired by the camera module 180, and display the acquired preview image through the flexible display 160.

In an embodiment, the control screen 302 may include a user interface (UI) for controlling the camera module 180. The UI may include visual objects corresponding to control functions of the camera module 180. For example, the visual objects may correspond to at least one of shutter, flash setting, sensitivity setting, focus setting, white balance setting, timer setting, exposure setting, macro photography setting, setting menu entry, and gallery entry among the control functions of the camera module 180, but are not limited by the above-described examples.

In an embodiment, a user of the electronic device 101 may touch the visual objects displayed on the flexible display 160 and execute the control function of the camera module 180 corresponding to the touched visual object.

In an embodiment, the combined screen 303 may include the preview screen 301 and the control screen 302. The electronic device 101 may display the combined screen 303 in which the preview screen 301 and the control screen 302 are overlapped, through the flexible display 160.

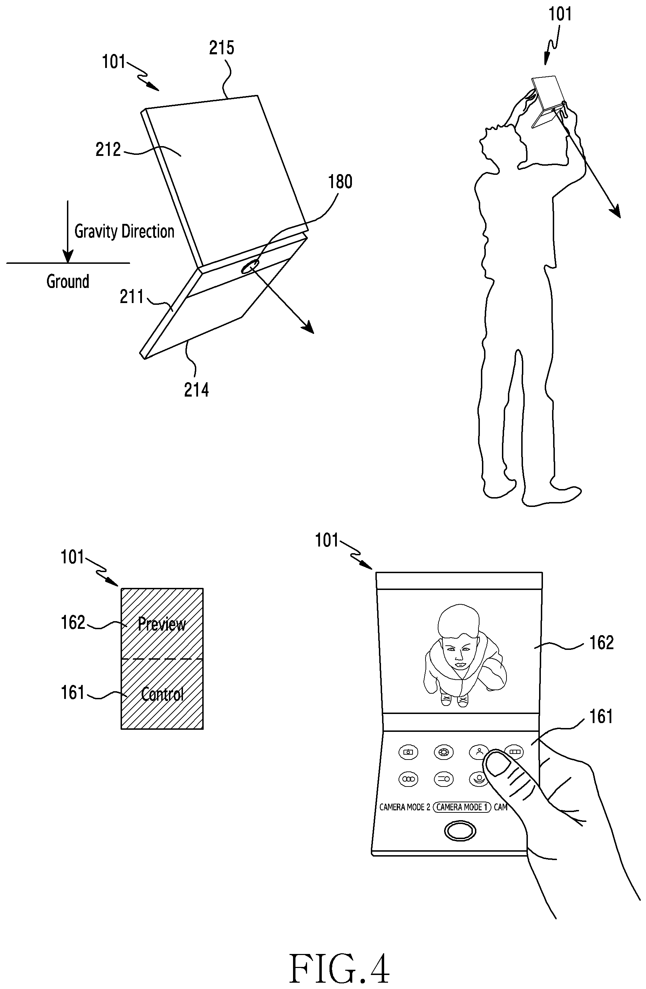

FIG. 4 illustrates an example in which the electronic device 101 operates in a first mode according to an embodiment.

Referring to FIG. 4, the electronic device 101 may operate in the first mode. In an embodiment, the first mode of the electronic device 101 may mean controlling an application related to the camera module 180 in the first mode.

In an embodiment, the processor 120 may determine whether an angle formed by the first part 211 and the second part 212 is within a first specified angle range and the positioning of the electronic device 101 satisfies a specified condition, and enable the electronic device 101 to operate in the first mode according to the determination result.

In an embodiment, the first specified angle range may be included in an angle range of greater than or equal to 0° and less than 180°, and may include 90°.

In an embodiment, the specified condition may be a condition in which the first part 211 faces the direction of gravity and the second part 212 faces a direction opposite to gravity.

In an embodiment, the specified condition may be a condition in which the first part 211 faces the ground and the second part 212 does not face the ground.

In an embodiment, the specified condition may be a condition in which the first part 211 is positioned closer to the ground than the second part 212.

In an embodiment, the specified condition may be a condition in which the positioning of the electronic device 101 is such that the first part 211 is positioned relatively lower than the second part 212.

In an embodiment, when the processor 120 determines that the angle formed by the first part 211 and the second part 212 is within the first specified angle range and the positioning of the electronic device 101 satisfies the specified condition, the electronic device 101 may operate in the first mode.

In an embodiment, the processor 120 of the electronic device 101 operating in the first mode may display the control screen 302 of the application related to the camera module 180 in the first display region 161 of the flexible display 160, and display the preview screen 301 including a preview image acquired by the camera module 180 in the second display region 162.

The user of the electronic device 101 may photograph at a high-angle by using the electronic device 101 operating in the first mode and the camera module 180. Even when the electronic device 101 is higher than a user's eye level, the user may take a high-angle shot by using the preview screen 301 displayed in the second display region 162 and the control screen 302 displayed in the first display region 161.

The user of the electronic device 101 may photograph at an angle of looking down from the top by using the electronic device 101 operating in the first mode and the camera module 180. Even when the electronic device 101 is higher than the user's eye level, the user may photograph at the angle of looking down from the top conveniently by using the preview screen 301 displayed in the second display region 162 and the control screen 302 displayed in the first display region 161.

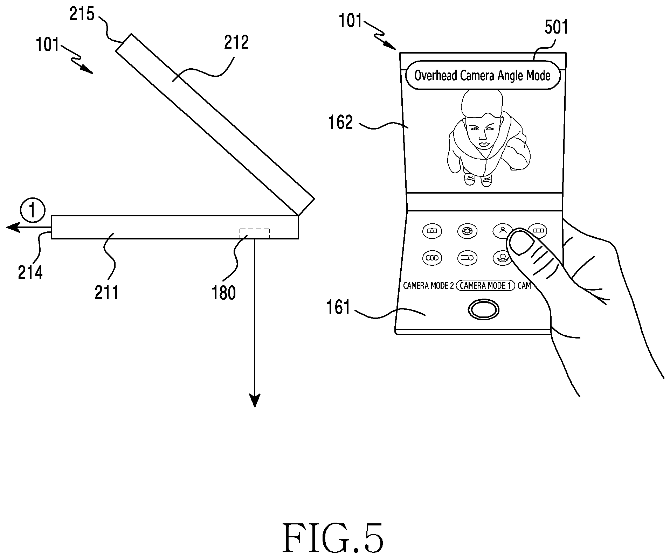

FIG. 5 illustrates another example in which the electronic device 101 operates in a first mode according to an embodiment.

Referring to FIG. 5, the electronic device 101 may operate in the first mode.

In an embodiment, while the electronic device 101 operates in the first mode, the processor 120 may identify a direction (e.g., direction ①) that the first part 211 faces by using the sensor module 176. In an embodiment, the processor 120 may determine whether the direction that the first part 211 faces is substantially perpendicular to the direction of gravity (or is substantially parallel to the ground). When the direction that the first part 211 faces is substantially perpendicular to the direction of gravity, a direction that the camera module 180 faces may be substantially the same as the direction of gravity or may be perpendicular to the ground. In an embodiment, the processor 120 may determine whether a plane formed by the first part 211 (e.g., a plane in which the first part 211 extends in the direction ①) is parallel to the ground by using the sensor module 176.

In an embodiment, when the direction that the first part 211 faces is substantially perpendicular to the direction of gravity (or when the plane formed by the first part 211 is parallel to the ground), the processor 120 may display a user interface (UI) 501 indicating that a camera angle (or a shooting angle) of the camera module 180 is substantially perpendicular to the ground, to overlap with the preview screen 301, in the second display region 162. In an embodiment, the processor 120 may display the control screen 302 in the first display region 161. The UI 501 may include a visual object indicating that the camera module 180 is substantially perpendicular to the ground direction.

The user of the electronic device 101 may photograph at a camera angle of an overhead camera angle by using the electronic device 101 operating according to another example of the aforementioned first mode and the camera module 180.

The photographing of the overhead camera angle may be photographing in a direction in which the camera module 180 looks at the ground in front. The photographing of the overhead camera angle may be photographing in a state in which a direction that the camera module 180 faces is substantially perpendicular to the ground. The photographing of the overhead camera angle may be photographing at an angle perpendicular to the ground from top to bottom. The user of the electronic device 101 may photograph at an angle of looking down vertically from top to bottom, through the electronic device 101 operating according to another example of the aforementioned first mode and the camera module 180. The user of the electronic device 101 may photograph at the angle of looking down vertically from top to bottom conveniently and accurately through a visual object indicating that a camera angle is perpendicular to the ground.

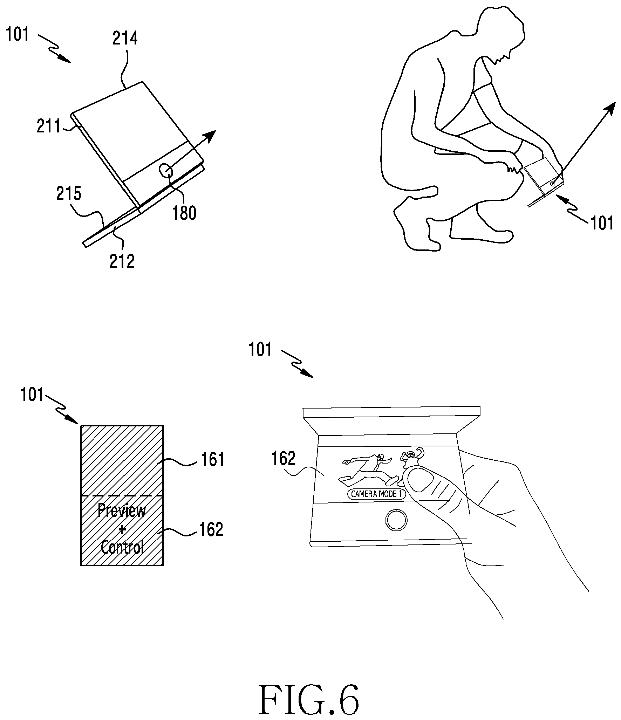

FIG. 6 illustrates an example in which the electronic device 101 operates in a second mode according to an embodiment.

Referring to FIG. 6, the electronic device 101 of an embodiment may operate in the second mode. In an embodiment, the second mode of the electronic device 101 may mean controlling an application related to the camera module 180 in the second mode.

In an embodiment, the processor 120 may determine whether an angle formed by the first part 211 and the second part 212 is within a first specified angle range and the positioning of the electronic device 101 satisfies a specified condition. The processor 120 may enable the electronic device 101 to operate in the second mode according to the determination result.

In an embodiment, a case where the positioning of the electronic device 101 does not satisfy the specified condition may be a case where the first part 211 faces a direction opposite to gravity (or a direction opposite to the ground) and the second part 212 faces the direction of gravity (or the ground direction).

In an embodiment, a case where the positioning of the electronic device 101 does not satisfy the specified condition may be a case where the second part 212 is positioned closer to the ground than the first part 211.

In an embodiment, a case where the positioning of the electronic device 101 does not satisfy the specified condition may be a case where the second part 212 may be positioned relatively lower than the first part 211.

In an embodiment, a case where the positioning of the electronic device 101 does not satisfy the specified condition may be a case where the side surface 215 of the second part 212 is positioned relatively lower than the side surface 214 of the first part 211.

In an embodiment, when the processor 120 determines that the angle formed by the first part 211 and the second part 212 is within the first specified angle range and the positioning of the electronic device 101 does not satisfy the specified condition, the electronic device 101 may operate in the second mode.

In an embodiment, the processor 120 of the electronic device 101 operating in the second mode may display the combined screen 303 in which the preview screen 301 and the control screen 302 are combined, in the second display region 162. In an embodiment, the processor 120 may overlap the preview screen 301 and the control screen 302 and display in the second display region 162.

The user of the electronic device 101 of an embodiment may photograph at a low-angle by using the electronic device 101 operating in the second mode and the camera module 180. In an embodiment, even if the electronic device 101 is lower than a user's eye level, the user may take a low-angle shot conveniently through the preview image displayed in the second display region 162 and the UI related to the camera application.

The user of the electronic device 101 of an embodiment may photograph at an angle of looking up from the bottom by using the electronic device 101 operating in the second mode and the camera module 180. In an embodiment, even if the electronic device 101 is lower than the user's eye level, the user may photograph at an angle of looking up from the bottom conveniently through the preview image displayed in the second display region 162 and the UI related to the camera application.

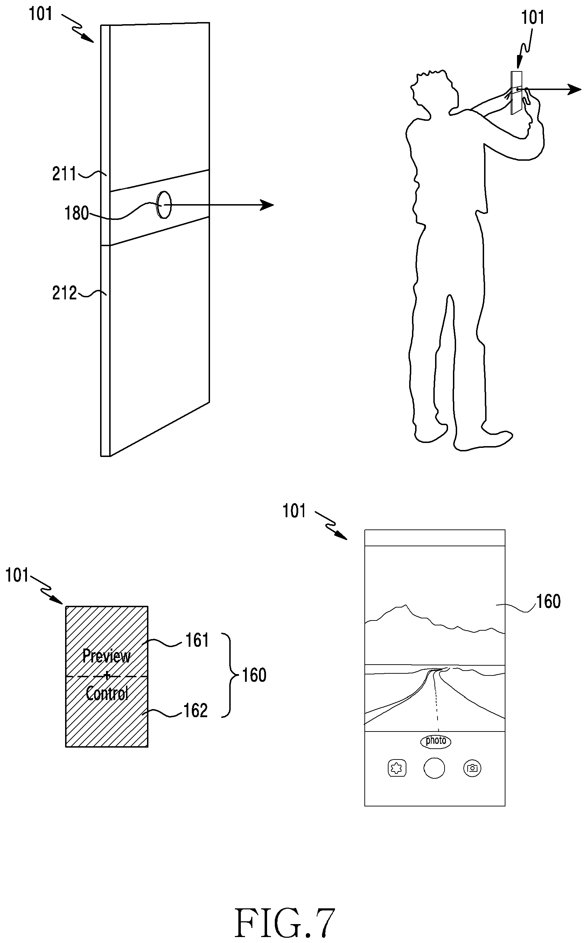

FIG. 7 illustrates an example in which the electronic device 101 operates in a third mode according to an embodiment.

Referring to FIG. 7, the electronic device 101 may operate in the third mode. In an embodiment, the third mode of the electronic device 101 may mean controlling an application related to the camera module 180 in the third mode.

In an embodiment, the processor 120 may identify whether an angle formed by the first part 211 and the second part 212 is within a second specified angle range, and enable the electronic device 101 to operate in the third mode according to the identification result.

In an embodiment, the second specified angle range may be greater than 90° and less than or equal to 180°. However, the second specified angle range may include 180°, and may not overlap with the first specified angle range.

In an embodiment, when the angle formed by the first part 211 and the second part 212 is substantially 180°, it may be included in the second specified angle range.

In an embodiment, the processor 120 of the electronic device 101 operating in the third mode may display the combined screen 303 in which the preview screen 301 and the control screen 302 are overlapped, in the entire display region of the flexible display 160 including the first display region 161 and the second display region 162.

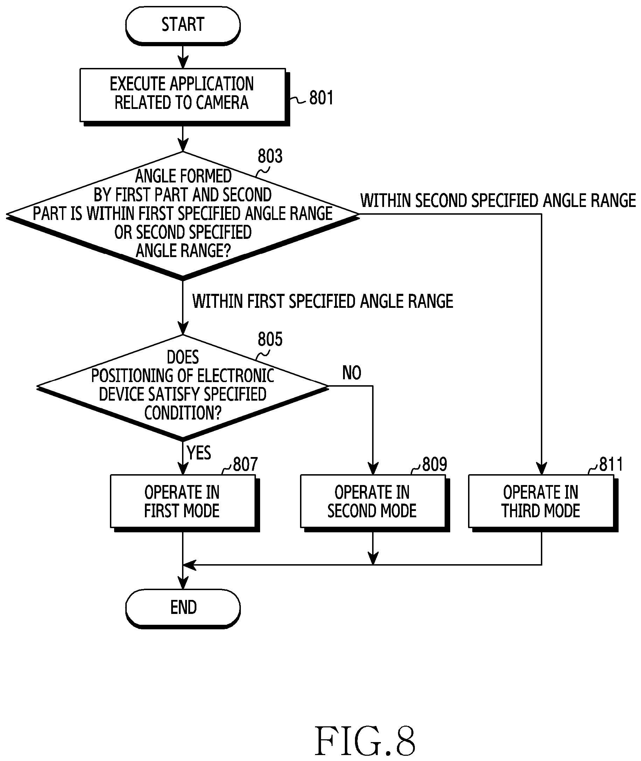

FIG. 8 is a flowchart illustrating a method in which the electronic device 101 operates in a first mode to a third mode according to an embodiment.

Referring to FIG. 8, in operation 801, the electronic device 101 may execute an application related to a camera. For example, the processor 101 may execute an application related to the camera module 180.

In operation 803, the electronic device 101 may identify whether an angle formed by the first part 211 and the second part 212 is within a first specified angle range or is within a second specified angle range. For example, the processor 120 may identify the angle formed by the first part 211 and the second part 212, based on a value (or data) acquired by the sensor module 176, and may determine whether the angle being based on the identification is within the first specified angle range or is within the second specified angle range. The first specified angle range may be included in an angle range of greater than or equal to 0° and less than 180°, but may include an angle of 90°. The second specified angle range may be included in an angle range of greater than 90° and less than or equal to 180°, but may include an angle of 180°. The first specified angle range and the second specified angle range may not be overlapped. When the angle formed by the first part 211 and the second part 212 is within the first specified angle range, the electronic device 101 may perform operation 805, based on the determination, and when the angle formed by the first part 211 and the second part 212 is within the second specified angle range, the electronic device 101 may perform operation 811.

In operation 805, the electronic device 101 may identify whether the positioning of the electronic device 101 satisfies a specified condition. For example, the processor 120 may identify whether the positioning of the electronic device 101 satisfies the specified condition, based on a value (or data) acquired by the sensor module 176.

The specified condition may be, for example, a condition in which the first part 211 faces the direction of gravity (or the ground direction) and the second part 212 faces a direction opposite to gravity (or a direction opposite to the ground).

The specified condition may be, for another example, a condition in which the first part 211 is positioned closer to the ground than the second part 212.

The specified condition may be, for further example, a condition in which the side surface 214 of the first part 211 is positioned closer to the ground than the side surface 215 of the second part 212.

The specified condition may be, for yet another example, a condition in which the first part 211 is positioned relatively lower than the second part 212.

The specified condition may be, for still another example, a condition in which the side surface 214 of the first part 211 is positioned relatively lower than the side surface 215 of the second part 212.

When the processor 120 identifies that the positioning of the electronic device 101 satisfies the specified condition, the electronic device 101 may perform operation 807, and otherwise, the electronic device 101 may perform operation 809.

In operation 807, the electronic device 101 may operate in the first mode. For example, when the angle formed by the first part 211 and the second part 212 is within the first specified angle range and the positioning of the electronic device 101 satisfies the specified condition, the processor 120 may enable the electronic device 101 to operate in the first mode. In the first mode, the electronic device 101 of an embodiment may display the control screen 302 of the application related to the camera module 180 in the first display region 161, and display the preview screen 301 acquired by the camera module 180 in the second display region 162. In an embodiment, when the electronic device 101 operating in the first mode is in a state in which a direction that the camera module 180 faces and the direction of gravity match with each other, the electronic device 101 may display the UI 501 indicating the state in the second display region 162.

In operation 809, the electronic device 101 may operate in the second mode. For example, when the angle formed by the first part 211 and the second part 212 is within the first specified angle range and the positioning of the electronic device 101 does not satisfy the specified condition, the processor 120 may enable the electronic device 101 to operate in the second mode. In an embodiment, the electronic device 101 operating in the second mode may display the combined screen 303 in which the preview screen 301 and the control screen 302 are overlapped, in the second display region 162.

In operation 811, the electronic device 101 may operate in the third mode. For example, when the angle formed by the first part 211 and the second part 212 is within the second specified angle range, the processor 120 may enable the electronic device 101 to operate in the third mode. In an embodiment, the electronic device 101 operating in the third mode may expand and display the combined screen 303 in the entire display region of the flexible display 160 including the first display region 161 and the second display region 162.

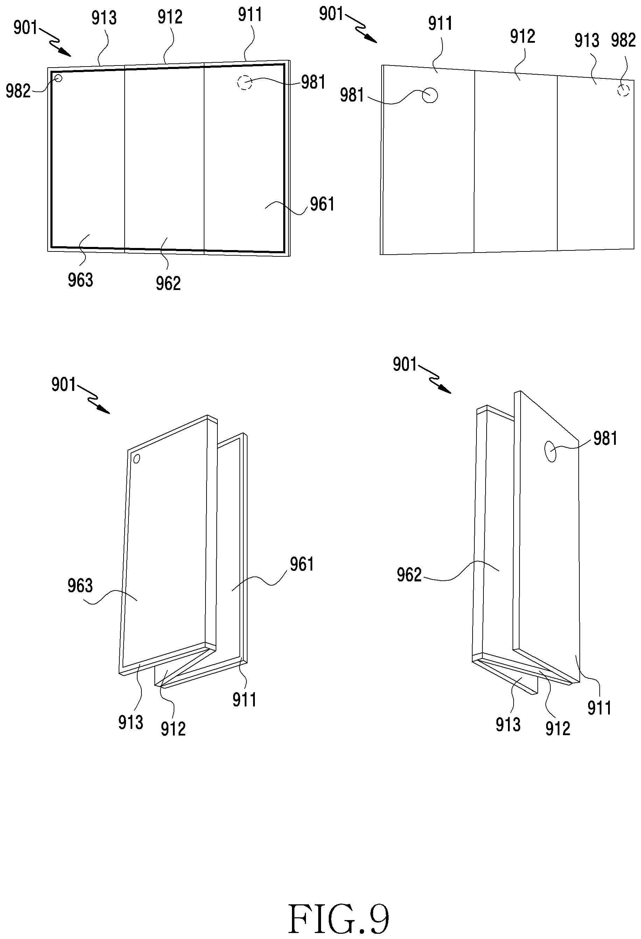

FIG. 9 illustrates an electronic device 901 according to another embodiment.

Referring to FIG. 9, the electronic device 901 may include a housing 910, a flexible display 960, a first camera 981 (e.g., the camera module 180 of FIG. 2), and a second camera 982 (e.g., the camera module 180 of FIG. 2). Although not shown in FIG. 9, the electronic device 901 may include at least some of the components of the electronic device 101 of FIG. 1.

In the following embodiments, a surface on which the flexible display 960 is visible when the electronic device 901 of a fully unfolded state is viewed from the outside is defined as a front surface of the electronic device 901, and a surface opposite to the front surface is defined as a rear surface of the electronic device 901.

In an embodiment, the housing 910 may include a first part 911, a second part 912, and a third part 913.

In an embodiment, the first part 911 may be coupled to the second part 912 to be rotatable about the second part 912. In an embodiment, the second part 912 may be coupled to the third part 913 to be rotatable about the third part 913. In an embodiment, the third part 913 may be connected to the second part 912 to be rotatable about the second part 912.

In an embodiment, the housing 910 may include a metal and/or a polymer.

In an embodiment, the flexible display 960 may be arranged over the first part 911, the second part 912, and the third part 913 of the housing 910. At least a portion of the flexible display 960 may be accommodated and arranged in a recess formed by the housing 910, and at least a portion of the flexible display 960 may be seen from the outside of the electronic device 901.

In an embodiment, the flexible display 960 may be bent according to a rotation operation of a plurality of parts included in the housing 910. For example, the flexible display 960 may be bent or deformed to correspond to an angle formed by the first part 911, the second part 912, and the third part 913.

In an embodiment, the flexible display 960 may form most of the front surface of the electronic device 901. The rest of the front surface may be formed by the housing 910. In another embodiment, the flexible display 960 may form the entire front surface of the electronic device 901 as well.

In an embodiment, the flexible display 960 may include a first display region 961 corresponding to the first part 911, a second display region 962 corresponding to the second part 912, and a third display region 963 corresponding to the third part 913.

In an embodiment, the first camera 981 may be arranged in a rear surface of the first part 911. For example, at least a portion of the first camera 981 may be inserted into an opening formed in the rear surface of the first part 911 and be arranged. The opening may be formed in a surface, which faces the flexible display 960, of the first part 911. The first camera 981 may be viewed from the outside through the opening, and may acquire information about an image acquired through the opening.

In an embodiment, the second camera 982 may be arranged in a front surface of the third part 913. For example, at least a portion of the second camera 982 may be accommodated and arranged in an opening formed in the front surface of the third part 913. In an embodiment, the opening may be formed at an inner side the third display region 963, or in another embodiment, unlike illustrated in FIG. 9, the opening may be formed in the third part 913 outside the third display region 963. The second camera 982 of an embodiment may acquire an image through the opening.

In an embodiment, a direction in which the first part 911 and the second part 912 are folded may be different from a direction in which the second part 912 and the third part 913 are folded. For example, in a state in which the first part 911 and the second part 912 are folded, the first display region 961 and the second display region 962 may be hidden and invisible, and in a state in which the second part 912 and the third part 913 are folded, the third display region 963 may be seen from the outside. That is, the first part 911 and the second part 912 may be folded in a direction wherein the front surface of the electronic device 901 is in contact with each other, and the second part 912 and the third part 913 may be folded in a direction wherein the rear surface of the electronic device 901 is in contact with each other.

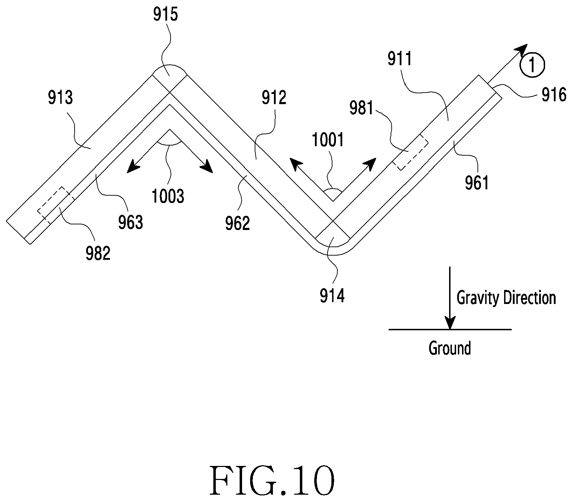

FIG. 10 illustrates a folded state of the electronic device 901 according to an embodiment.

Referring to FIG. 10, the electronic device 901 of an embodiment may include at least one connection part for connecting a plurality of parts of the housing 910. For example, the electronic device 901 may include a first connection part 914 for connecting the first part 911 and the second part 912 and a second connection part 915 for connecting the second part 912 and the third part 913.

In an embodiment, the first part 911 may be connected to the second part 912 by the first connection part 914. The first part 911 may rotate about the first connection part 914.

In an embodiment, the second part 912 may be connected to the third part 913 by the second connection part 915. The second part 912 may rotate about the second connection part 915.

In an embodiment, the third part 913 may rotate about the second connection part 915.

In an embodiment, the first connection part 914 and the second connection part 915 may include a hinge structure. The mechanism of the first connection part 914 and the second connection part 915 may equally employ the description presented in relation to the connection part 213 in FIG. 2.

In an embodiment, a method in which the processor 120 of the electronic device 901 identifies an angle of the housing 910 and a direction of the first part 911 by using the sensor module 176 may equally employ the description presented in FIG. 2.

For example, the sensor module 176 may include a first sensor arranged in the first part 911, a second sensor arranged in the second part 912, and a third sensor arranged in the third part 913. The processor 120 may detect the positioning of the first part 911, the second part 912, and the third part 913, respectively. The processor 120 may determine a rotation angle of the first part 911 with respect to x-axis, y-axis, and z-axis, respectively, based on a value acquired by the first sensor. The processor 120 may determine a rotation angle of the second part 912 with respect to x-axis, y-axis, and z-axis, respectively, based on a value acquired by the second sensor. The processor 120 may determine a rotation angle of the third part 913 with respect to x-axis, y-axis, and z-axis, respectively, based on a value acquired by the third sensor.

In an embodiment, the processor 120 may identify a direction of the first part 911, based on the determined rotation angle of the first part 911. For example, the processor 120 may identify whether a direction that the first part 911 faces is the ground direction, based on data acquired by the sensor module 176. The direction that the first part 911 faces may be a direction (e.g., direction ①) that a side surface 916 of the first part 911 faces. The side surface 916 of the first part 911 may be positioned opposite the first connection part 914. The side surface 916 of the first part 911 may be an edge farthest from the first connection part 914 among edges of the first part 911.

In an embodiment, the processor 120 may identify an angle formed by the housing 910, based on a value acquired by the sensor module 176. For example, the processor 120 may determine an angle formed by the first part 911 and the second part 912, based on the detected positioning of the first part 911 and the detected positioning of the second part 912. The processor 120 may determine an angle formed by the second part 912 and the third part 913, based on the detected positioning of the second part 912 and the detected positioning of the third part 913.

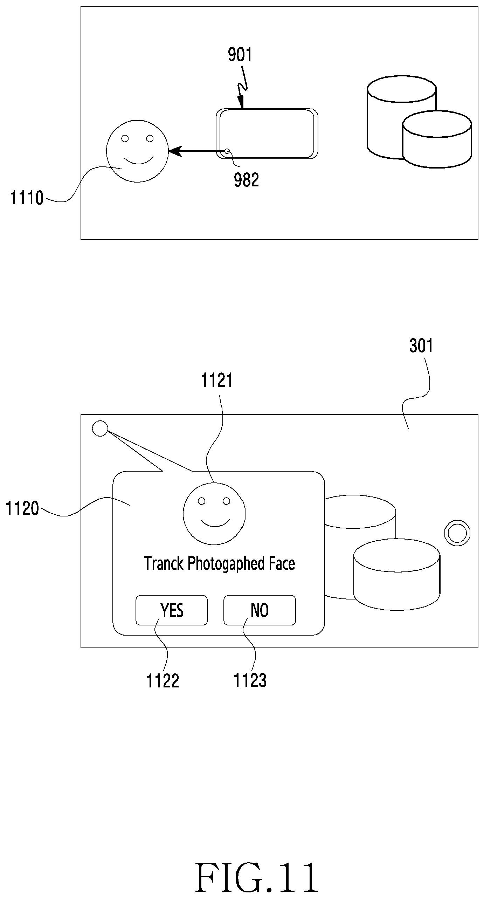

FIG. 11 illustrates a method for recognizing a user's face in the electronic device 901 according to an embodiment.

Referring to FIG. 11, the electronic device 901 may track a face 1110 of a user of the electronic device 901 by using the second camera 982.

In an embodiment, the processor 120 of the electronic device 901 may acquire an image including the user's face 1110 by using the second camera 982. The processor 120 may recognize the user's face 1110 included in the acquired image. In this case, the processor 120 may display a UI for the user to select whether to keep the tracking of the recognized face 1110, on the flexible display 960. The UI may include an image 1121 of the recognized face 1110, an object 1122 for selecting to track the recognized face 1110, and an object 1123 for selecting not to track the recognized face 1110.

When the user of the electronic device 901 selects the object 1122, the processor 120 may keep the tracking of the user's face 1110 by comparing the recognized face 1121 and a face included in the image acquired by the second camera 982 after the recognition.

When the user of the electronic device 901 selects the object 1123, the processor 120 may not maintain the tracking of the user's face 1110.

In another embodiment, the processor 120 may track the user's face 1110 included in an image acquired by the second camera 982 without user's selection as well. For example, the processor 120 may track the user's face 1110 by comparing a face image previously registered by the user and a face image included in an image acquired by the second camera 982 as well.

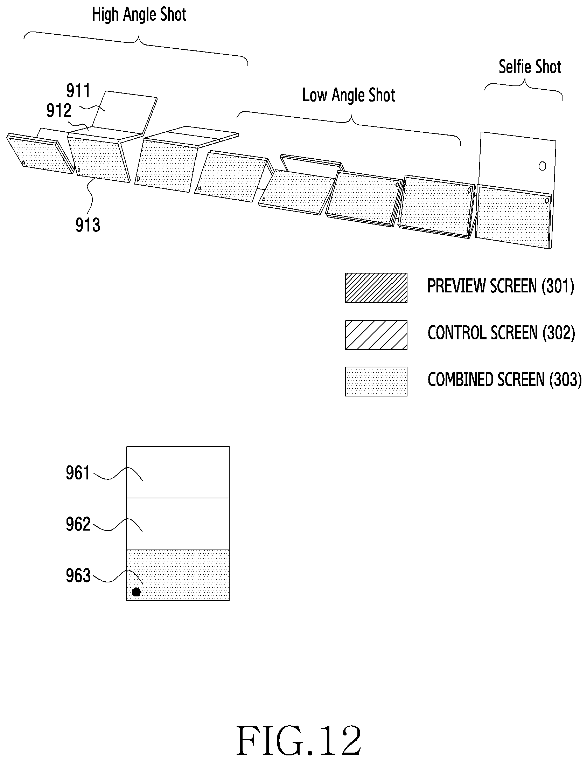

FIG. 12 illustrates an example in which the electronic device 901 operates in a first mode according to an embodiment.

Referring to FIG. 12, the electronic device 901 may operate in the first mode. In an embodiment, the first mode of the electronic device 901 may mean controlling an application related to the first camera 981 and/or the second camera 982 in the first mode.

In an embodiment, the processor 120 may determine whether an angle formed by the second part 912 and the third part 913 is within a first specified angle range, and a face of a user of the electronic device 901 is being tracked. The processor 120 of an embodiment may enable the electronic device 901 to operate in the first mode, based on the identification.

In an embodiment, the first specified angle range may be included in an angle range of greater than or equal to 0° and less than 180°, but the first specified angle range may include 90°.

In an embodiment, when the processor 120 identifies that the angle formed by the second part 911 and the third part 912 is within the first specified angle range and the face of the user of the electronic device 901 is being tracked using the second camera 982, the electronic device 901 may operate in the first mode.

In an embodiment, the processor 120 operating in the first mode may display the combined screen 303 in which the preview screen 301 and the control screen 302 are overlapped, in the third display region 963.

The user of the electronic device 901 may photograph at various angles by using the electronic device 901 operating in the first mode and the first camera 981. For example, as shown in FIG. 12, the user may take a high-angle shot, a low-angle shot, or a selfie shot according to the positioning of the electronic device 901.

In another embodiment, when the processor 120 identifies that the face of the user of the electronic device 901 is being tracked using the second camera 982 regardless of the angle formed by the second part 911 and the third part 912, the electronic device 901 may operate in the first mode as well.

In the description referring to FIG. 12 and in the following, when whether the user's face is being tracked is included as a condition for determining a mode of the electronic device 901, even if the tracking of the user's face is not maintained after the electronic device 901 starts to operate in the mode, the electronic device 901 may maintain a currently operating mode.

In the description referring to FIG. 12 and in the following, when whether the user's face is being tracked is included as the condition for determining the mode of the electronic device 901, even if the tracking of the face of the user is not maintained after the electronic device 901 starts to operate in the mode, the electronic device 901 may maintain a currently operating mode, when an angle change (e.g., angle 1001 or angle 1003 of FIG. 10) of the housing 910 is not detected.

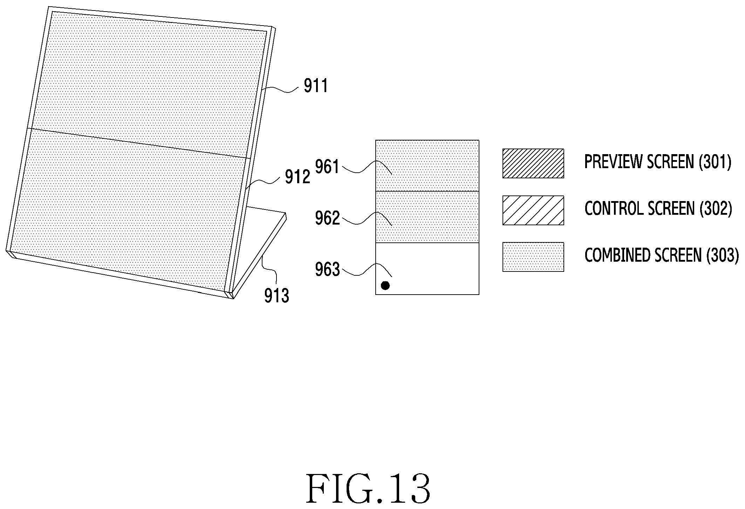

FIG. 13 illustrates an example in which the electronic device 901 operates in a second mode according to an embodiment.

Referring to FIG. 13, the electronic device 901 may operate in the second mode. In an embodiment, the second mode of the electronic device 901 may mean a mode for controlling an application associated with the first camera 981 and/or the second camera 982 in the second mode.

In an embodiment, when the processor 120 identifies that an angle formed by the second part 912 and the third part 913 is within a first specified angle range, and a face of a user of the electronic device 901 is not being tracked, and an angle formed by the first part 911 and the second part 912 is within a second specified angle range, the electronic device 901 may operate in the second mode.

The second angle range may be included in an angle range of greater than 90° and less than or equal to 180°. However, the second angle range may include 180°.

In an embodiment, the first angle range and the second angle range may not overlap.

A case where the face of the user of the electronic device 901 is not being tracked may be, for example, a case where the user selects the object 1123 for selecting not to track the face. For another example, it may be a case where a face included in an image acquired by the second camera 982 may not match with the user's face 1121 or a previously registered user's face. For further example, it may be a case where a face is not included in the image acquired by the second camera 982 or a face is not be recognized.

In an embodiment, the electronic device 901 operating in the second mode may display the combined screen 303 in a display region of the flexible display 960 including the first display region 961 and the second display region 962.

In another embodiment, when the processor 120 identifies that the angle formed by the second part 912 and the third part 913 is within the first specified angle range and the face of the user of the electronic device 901 is not being tracked regardless of the angle formed by the first part 911 and the second part 912, the electronic device 901 may operate in the second mode as well.

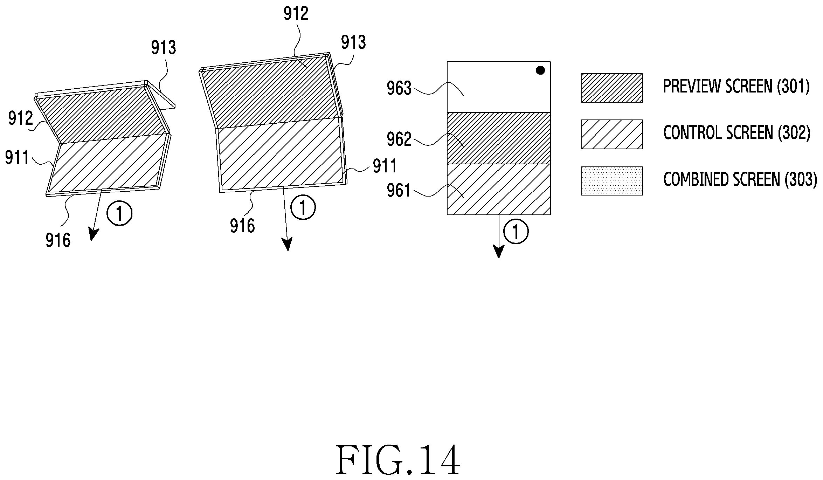

FIG. 14 illustrates an example in which the electronic device 901 operates in a third mode according to an embodiment.

Referring to FIG. 14, the electronic device 901 may operate in the third mode. In an embodiment, the third mode of the electronic device 901 may mean a mode for controlling an application associated with the first camera 981 and/or the second camera 982 in the third mode.

In an embodiment, when the processor 120 identifies that an angle formed by the second part 912 and the third part 913 is within a first specified angle range, and a face of a user of the electronic device 901 is not being tracked, and an angle formed by the first part 911 and the second part 912 is not within a second specified angle range, and the first part 911 faces the ground, the electronic device 901 may operate in the third mode.

In an embodiment, a case where the first part 911 faces the ground may be a case where a direction (e.g., direction ①) that the side surface 916 of the first part 911 faces is the direction of gravity.

In an embodiment, the processor 120 operating in the third mode may display the preview screen 301 in the second display region 962 and the control screen 302 in the first display region 961.

In another embodiment, when the processor 120 identifies that the face of the user of the electronic device 901 is not being tracked and the first part 911 faces the ground regardless of the angle between the first part 911 and the second part 912 and the angle between the second part 912 and the third part 913, the electronic device 901 may operate in the third mode.

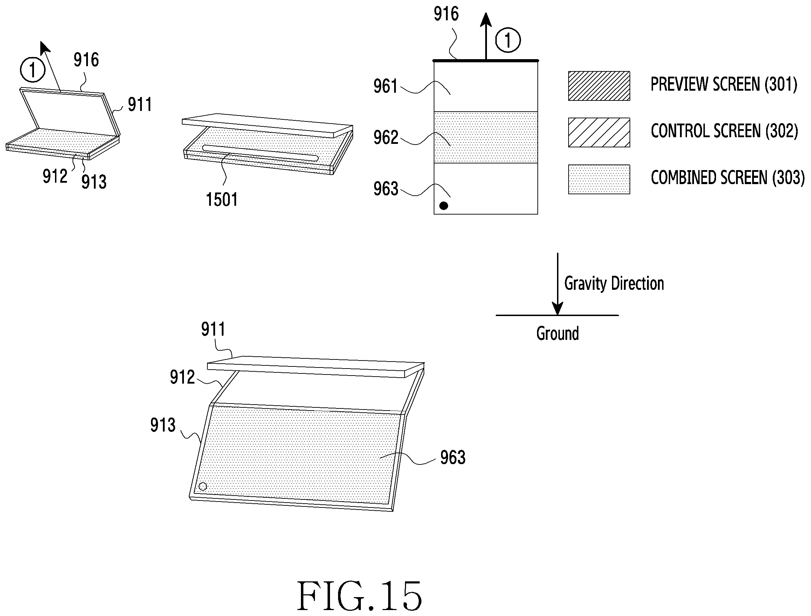

FIG. 15 illustrates an example in which the electronic device 901 operates in a fourth mode according to an embodiment.

Referring to FIG. 15, the electronic device 901 may operate in the fourth mode. In an embodiment, that the electronic device 901 operates in the fourth mode may mean controlling an application related to the first camera 981 and/or the second camera 982 in the fourth mode.

In an embodiment, when the processor 120 identifies that an angle formed by the second part 912 and the third part 913 is within a first specified angle range, and a face of a user of the electronic device 901 is not being tracked, and an angle formed by the first part 911 and the second part 912 is not within a second specified angle range, and the first part 911 does not face the ground, the electronic device 901 may operate in the fourth mode.

In an embodiment, a case where the first part 911 does not face the ground may be a case where the side surface 916 of the first part 911 substantially faces a direction opposite to gravity.

In an embodiment, the processor 120 operating in the fourth mode may display the combined screen 303 in the second display region 962.

In an embodiment, when the angle formed by the first part 911 and the second part 912 is within a preset angle range, the processor 120 operating in the fourth mode may display a UI 1501 in the second display region 962. The preset angle range may be included in the first specified angle range, but a maximum value of the preset angle range may be less than 90°. The UI 1501 may indicate that a region displaying the combined screen 303 changes from the second display region 962 to the third display region 963, when the user unfolds the second part 912 and the third part 913. In an embodiment, the UI 1501 may include a text such as "unfold to view camera UI".

In an embodiment, when the user of the electronic device 901 unfolds the second part 912 and the third part 913, the processor 120 may change the region displaying the combined screen 303 into the third display region and display, as in the first mode shown in FIG. 12.

In another embodiment, when the processor 120 identifies that the face of the user of the electronic device 901 is not being tracked and the first part 911 does not face the ground regardless of the angle between the first part 911 and the second part 912 and the angle between the second part 912 and the third part 913, the electronic device 901 may operate in the fourth mode.

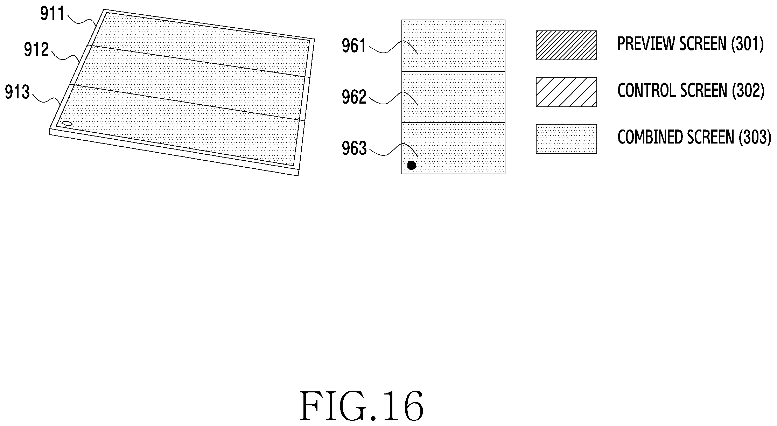

FIG. 16 illustrates an example in which the electronic device 901 operates in a fifth mode according to an embodiment.

Referring to FIG. 16, the electronic device 901 may operate in the fifth mode. In an embodiment, that the electronic device 901 operates in the fifth mode may mean controlling an application related to the first camera 981 and the second camera 982 in the fifth mode.

In an embodiment, when the processor 120 identifies that an angle formed by the second part 912 and the second part 913 is within a second specified angle range, and an angle formed by the first part 911 and the second part 912 is within the second specified angle range, the electronic device 901 may operate in the fifth mode.

In an embodiment, the second specified angle range may be included in an angle range of greater than 90° and less than or equal to 180°, and may include 180°. However, FIG. 16 shows that in the electronic device 901, the angle formed by the first part 911 and the second part 912 and by the second part 912 and the third part 913 is substantially 180°.

In an embodiment, the processor 120 of the electronic device 901 operating in the fifth mode may display the combined screen 303 in the entire display region of the flexible display 960 including the first display region 961, the second display region 962, and the third display region 963.

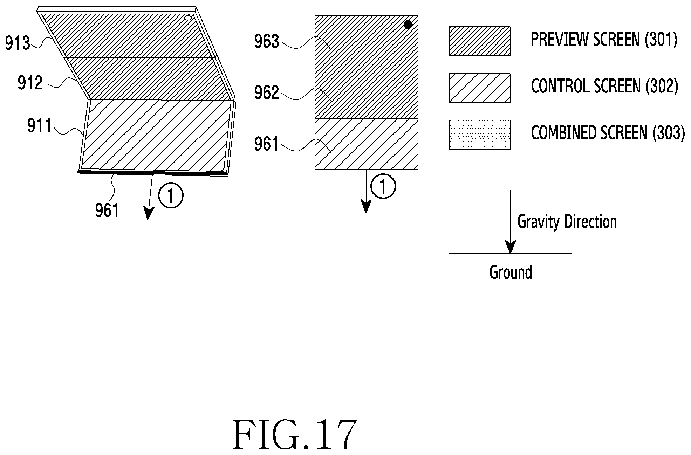

FIG. 17 illustrates an example in which the electronic device 901 operates in a sixth mode according to an embodiment.

Referring to FIG. 17, the electronic device 901 may operate in a sixth mode. The sixth mode of the electronic device 901 of an embodiment may mean an operation mode for controlling an application related to the first camera 981 and the second camera 982 in the sixth mode.

In an embodiment, when the processor 120 identifies that an angle formed by the second part 912 and the third part 913 is within a first specified angle range, and an angle formed by the first part 911 and the second part 912 is not within a second specified angle range, and the first part 911 faces the ground, the electronic device 901 may operate in the sixth mode.

In an embodiment, the processor 120 operating in the sixth mode may display the control screen 302 in the first display region 961, and display the preview screen 301 in the second display region 962 and the third display region 963.

In another embodiment, when the processor 120 identifies that the angle formed by the second part 912 and the third part 913 is within the first specified angle range, and the angle formed by the first part 911 and the second part 912 is not within the second specified angle range, and the face of the user of the electronic device 901 is being tracked, and the first part 911 faces the ground, the electronic device 901 operates in the sixth mode.

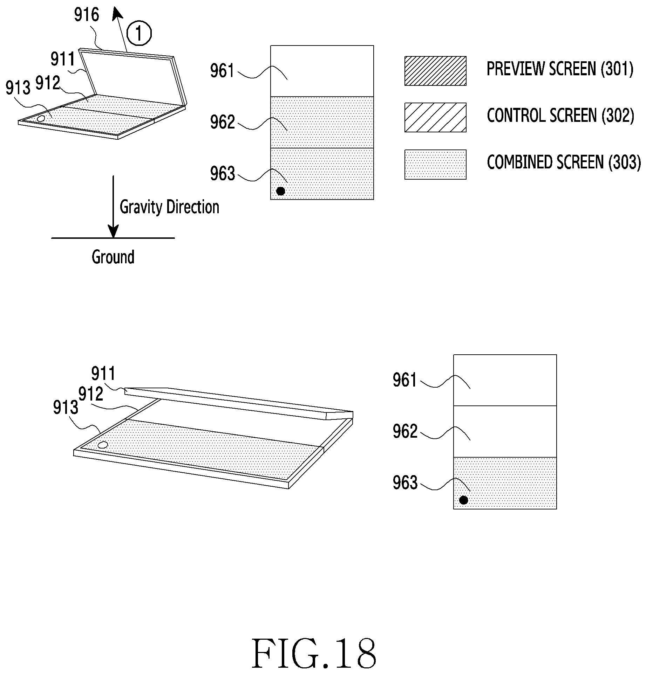

FIG. 18 illustrates an example in which the electronic device 901 operates in a seventh mode according to an embodiment.

Referring to FIG. 18, the electronic device 901 may operate in the seventh mode. In an embodiment, that the electronic device 901 operates in the seventh mode may mean controlling an application related to the first camera 981 and the second camera 982 in the seventh mode.

In an embodiment, when the processor 120 identifies that an angle formed by the second part 912 and the third part 913 is within a second specified angle range, and an angle formed by the first part 911 and the second part 912 is not within the second specified angle range, and the first part 911 does not face the ground, the electronic device 901 may operate in the seventh mode.

In an embodiment, the processor 120 operating in the seventh mode may display the combined screen 303 in the second display region 962 and the third display region 963.

In an embodiment, when the angle formed by the first part 911 and the second part 912 is greater than or equal to 0° and less than 45°, the processor 120 operating in the seventh mode may change and display the combined screen 303, which is being displayed through the first display region 961 and the second display region 962, in the third display region 963.

In another embodiment, when the processor 120 identifies that the angle formed by the second part 912 and the third part 913 is within the second specified angle range, and the angle formed by the first part 911 and the second part 912 is not within the second specified angle range, and the face of the user of the electronic device 901 is not being tracked, and the first part 911 does not face the ground, the electronic device 901 may operate the seventh mode as well.

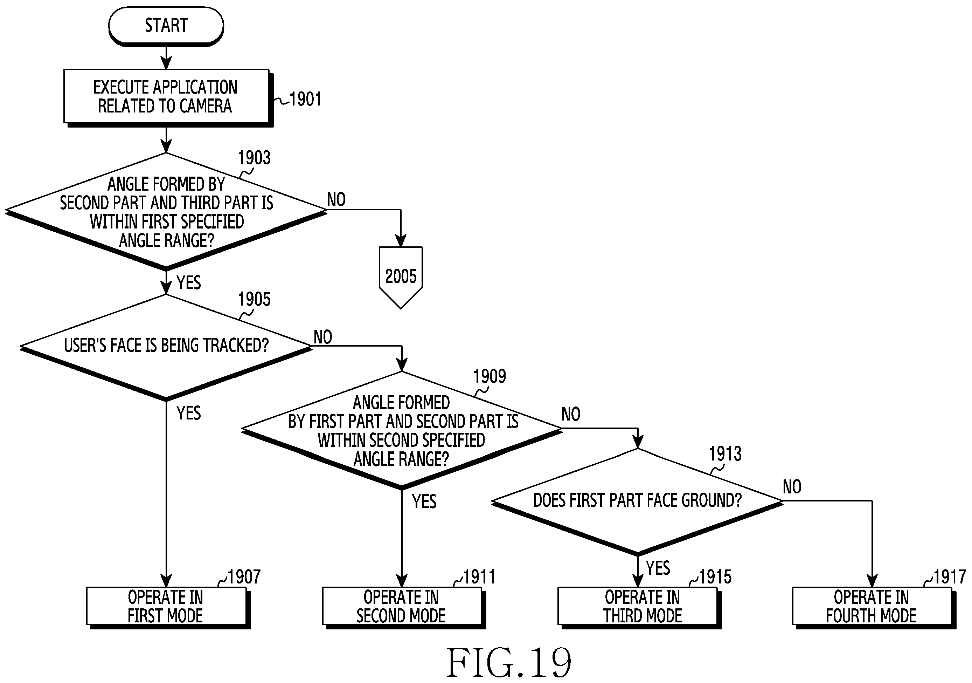

FIG. 19 is a flowchart illustrating a method in which the electronic device 901 operates in a first mode to a fourth mode according to an embodiment.

Referring to FIG. 19, in operation 1901, the electronic device 901 may execute an application related to a camera. For example, the processor 120 may execute an application related to the first camera 981 and the second camera 982.

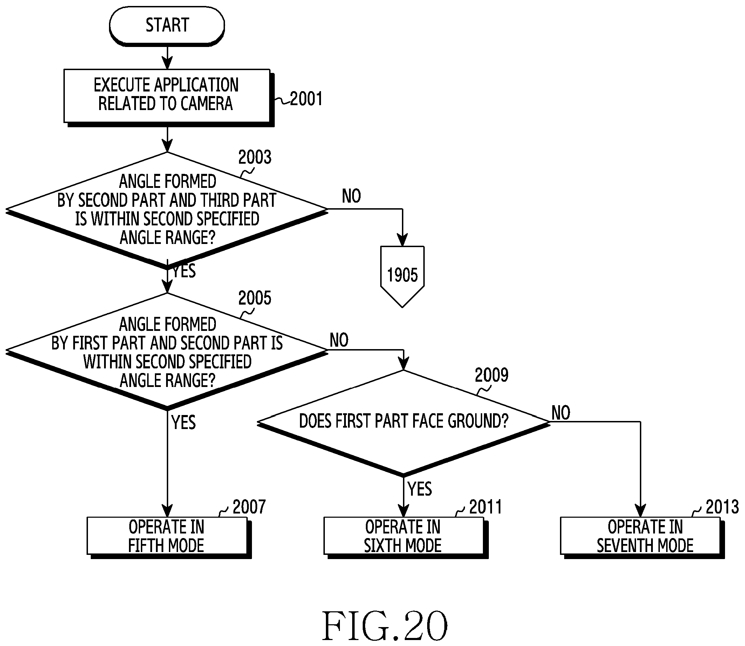

In operation 1903, the electronic device 901 may identify whether an angle formed by the second part 912 and the third part 913 is within a first specified angle range. For example, the processor 120 may identify whether the angle formed by the second part 912 and the third part 913 is within a specified angle range, based on a value acquired by the sensor module 176. The first specified angle range may be included in an angle range of greater than or equal to 0° and less than 180°, and the first specified angle range may include 90°. When the processor 120 identifies that the angle formed by the second part 912 and the third part 913 is within the first specified angle range, the processor 120 may perform operation 1905, and otherwise, the processor 120 may perform operation 2005 of FIG. 20.

In operation 1905, the electronic device 901 may identify whether a user's face is being tracked. For example, the processor 120 may recognize a face included in an image acquired by the second camera 982, and track the user's face, based on the recognition. When the processor 120 is tracking the face of the user of the electronic device 901, the processor 120 may perform operation 1907, and otherwise, the processor 120 may perform operation 1909.

In operation 1907, the electronic device 901 may operate in the first mode. For example, when the processor 120 identifies that the angle formed by the second part 912 and the third part 913 is within the specified angle range, and the user's face is being tracked using the second camera 982, the processor 120 may enable the electronic device 901 to operate in the first mode. In an embodiment, the processor 120 operating in the first mode may display the combined screen 303 in the third display region 963.

In operation 1909, the electronic device 901 may identify whether an angle formed by the first part 911 and the second part 912 is within a second specified angle range. For example, when it is identified that the face of the user of the electronic device 901 is not being tracked, the processor 120 may identify whether the angle formed by the first part 911 and the second part 912 is within the second specified angle range, based on a value acquired by the sensor module 176. The second specified angle range may be included in an angle range of greater than 90° and less than or equal to 180°, and may include 180°. However, the first specified angle range and the second specified angle range may not overlap. When the angle formed by the first part 911 and the second part 912 is within the second specified angle range, the processor 210 may perform operation 1911, and otherwise, the processor 210 may perform operation 1913.

In operation 1911, the electronic device 901 may operate in a second mode. For example, when the processor 120 identifies that the angle formed by the second part 912 and the third part 913 is within the first specified angle range, and the face of the user of the electronic device 901 is not being tracked, and the angle formed by the first part 911 and the second part 912 is within the second specified angle range, the processor 120 may enable the electronic device 901 to operate in the second mode. In an embodiment, the processor 120 operating in the second mode may display the combined screen 303 in the first display region 961 and the second display region 962.

In operation 1913, the electronic device 901 may identify whether the first part 911 faces the ground direction. For example, the processor 120 may identify whether a direction that the side surface 916 of the first part 911 faces is the ground direction, based on a value acquired by the sensor module 176. When the first part 911 faces the ground, the processor 120 may perform operation 1915, and otherwise, the processor 120 may perform operation 1917.

In operation 1915, the electronic device 901 may operate in a third mode. For example, when the processor 120 identifies that the angle formed by the second part 912 and the third part 913 is within the first specified angle range, and the face of the user of the electronic device 901 is not being tracked, and the angle formed by the first part 911 and the second part 912 is not within the second specified angle, and the first part 911 faces the ground, the processor 120 may enable the electronic device 901 to operate in the third mode. In an embodiment, the processor 120 operating in the third mode may display the control screen 302 in the first display region 961 and display the preview screen 301 in the second display region 962.

In operation 1917, the electronic device 901 may operate in the fourth mode. For example, when the processor 120 identifies that the angle formed by the second part 912 and the third part 913 is within the first specified angle range, and the face of the user of the electronic device 901 is not being tracked, and the angle formed by the first part 911 and the second part 912 is not within the second specified angle range, and the first part 911 does not face the ground, the processor 120 may operate in the fourth mode. In an embodiment, the processor 120 operating in the fourth mode may display the combined screen 303 in the second display region 962.

FIG. 20 is a flowchart illustrating a method in which the electronic device 901 operates in a fifth mode to a seventh mode according to an embodiment.

Referring to FIG. 20, in operation 2001, the electronic device 901 may execute an application related to a camera. For example, the processor 120 may execute an application related to the first camera 981 and the second camera 982.

In operation 2003, the electronic device 901 may identify whether an angle formed by the second part 912 and the third part 913 is a second specified angle. For example, the processor 120 may identify the angle formed by the second part 912 and the third part 913, based on a value acquired by the sensor module 176, and may identify whether the angle is within a second specified angle range. When the angle formed by the second part 912 and the third part 913 is within the second specified angle range, the processor 120 may perform operation 2005, and otherwise, the processor 120 may perform operation 1905 of FIG. 19.

In operation 2005, the electronic device 901 may identify whether an angle formed by the first part 911 and the second part 912 is within the second specified angle range. For example, the processor 120 may identify the angle formed by the first part 911 and the second part 912, based on data acquired by the sensor module 176, and may identify whether the angle is within the second specified angle range, based on the identification. When the angle formed by the first part 911 and the second part 912 is within the second specified angle range, the processor 120 may perform operation 2007, and otherwise, the processor 120 may perform operation 2009.

In operation 2007, the electronic device 901 may operate in the fifth mode. For example, when the angle formed by the second part 912 and the third part 913 and the angle formed by the first part 911 and the second part 912 are within the second specified angle range, the processor 120 may enable the electronic device 901 to operate in the fifth mode. In an embodiment, the processor 120 operating in the fifth mode may display the combined screen 303 in the first display region 961, the second display region 962, and the third display region 963.

In operation 2009, the electronic device 901 may identify whether the first part 911 faces the ground direction. For example, the processor 120 may identify whether the side surface 916 of the first part 911 faces the ground direction, based on a value acquired by the sensor module 176. When the first part 911 faces the ground, the processor 120 may perform operation 2011, and otherwise, the processor 120 may perform operation 2013.

In operation 2011, the electronic device 901 may operate in a sixth mode. For example, when the processor 120 identifies that the angle formed by the second part 912 and the third part 913 is within the second specified angle range, and the angle formed by the first part 911 and the second part 912 is not within the second specified angle range, and the first part 911 faces the ground, the processor 120 may enable the electronic device 901 to operate in the sixth mode. In an embodiment, the processor 120 operating in the sixth mode may display the control screen 302 in the first display region 961, and display the preview screen 301 in the second display region 962 and the third display region 963.

In operation 2013, the electronic device may operate in the seventh mode. For example, when the angle formed by the second part 911 and the third part 913 is within the second specified angle range, and the angle formed by the first part 911 and the second part 912 is not within the second specified angle range, and the first part 911 does not face the ground, the processor 120 may enable the electronic device 901 to operate in the seventh mode. In an embodiment, the processor 120 operating in the seventh mode may display the combined screen 303 in the second display region 962 and the third display region 963. In an embodiment, while the electronic device 901 operates in the seventh mode, the angle formed by the first part 911 and the second part 912 is within a predefined angle range (e.g., greater than or equal to 0° and less than 45°), the processor 120 may change a region displaying the combined screen 303, from the second display region 962 and the third display region 963 to the third display region 963, and display.

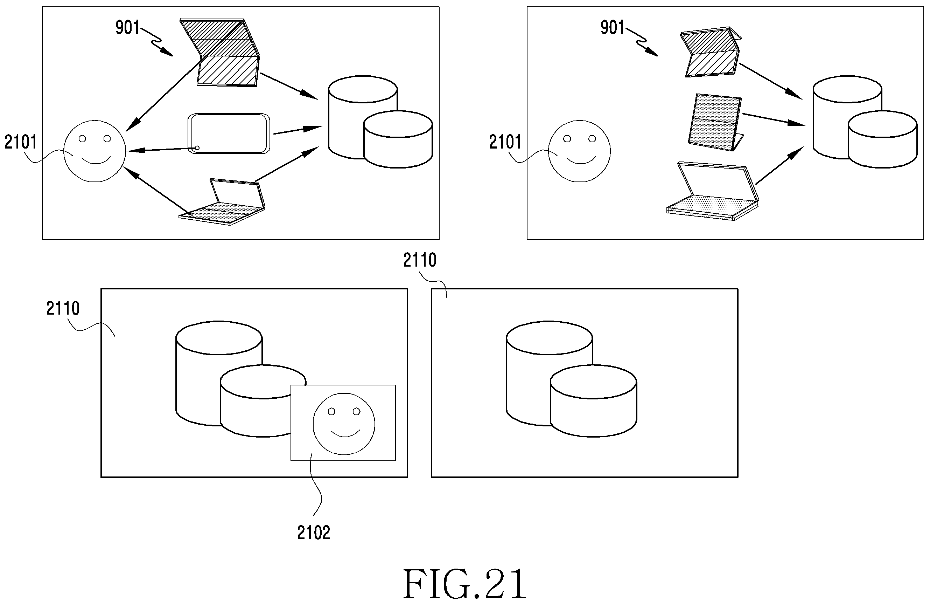

FIG. 21 illustrates an example in which the electronic device 901 displays a preview image acquired by the second camera 982 according to an embodiment.

Referring to FIG. 21, the processor 120 may acquire an image through the second camera 982. The processor 120 may identify a user's face 2101 included in the acquired image. The processor 120 may recognize a face included in the image acquired through the second camera 982 after identifying the user's face 2101 and compare the recognized face and the identified user's face 2101, thereby tracking the user's face 2101. In another embodiment, the processor 120 may compare a user's face previously stored in or registered to a memory of the electronic device 901 and a face included in the image acquired through the second camera 982, thereby tracking the user's face as well. When the processor 120 is tracking the user's face 2101, the processor 120 may display a preview image 2102 being based on at least a portion of the image acquired through the second camera 982, on the flexible display 960. The processor 120 may display the preview image 2102 to overlap with a preview image 2110 acquired through the first camera 981.

In an embodiment, when not being tracking the user's face 2101, the processor 120 may not display a preview image being based on the second camera 982. In this case, the processor 120 may display only the preview image 2110 acquired from the first camera 981, on the flexible display 960.

In an embodiment, when the electronic device 901 stops tracking the user's face 2101 in a state of tracking the user's face 2101, the electronic device 901 may fade out the preview image 2102 that is being displayed on the flexible display 960, and not display on the flexible display 960.

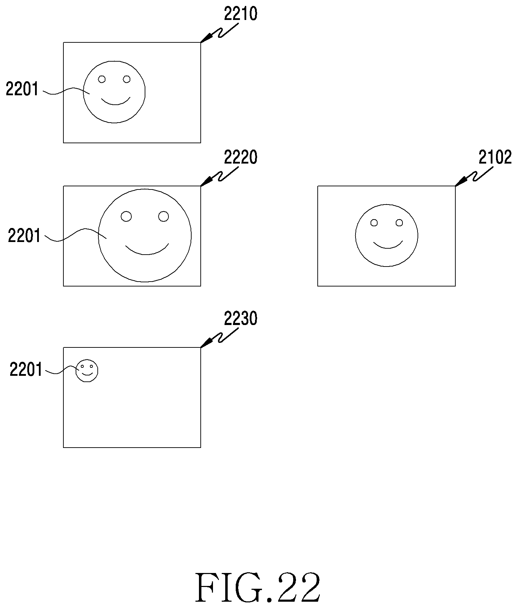

FIG. 22 illustrates an example in which the electronic device 901 corrects an image acquired by the second camera 982 and displays a preview image according to an embodiment.

Referring to FIG. 22, the processor 120 may acquire a first image 2210, a second image 2220, and a third image 2230 by using the second camera 982.

In an embodiment, the first image 2210 may be an image captured in a state in which a user's face 2201 is deviated from the center of the first image 2210. In this case, the processor 120 may correct the user's face 2201 deviated from the center to be positioned at the center of the image and display the preview image 2102.

In an embodiment, the second image 2220 may be an image in which the user's face 2201 is enlarged, or is photographed at a short distance from the second camera 982. In this case, the processor 120 may reduce the user's face 2201 of the second image 2220 and display the preview image 2102.

In an embodiment, the third image 2230 may be an image in which the user's face 2201 is reduced, or is photographed at a far distance from the second camera 982. In this case, the processor 120 may enlarge the user's face 2201 of the third image 2230 and display the preview image 2102.

An electronic device of various embodiments may include a housing including a plurality of parts and at least one hinge structure connecting the plurality of parts, a first hinge structure among the at least one hinge structure being arranged between a first part and a second part among the plurality of parts and connecting the first part to the second part, a first sensor arranged in the first part, a second sensor arranged in the second part, a display arranged in a space formed by the housing and bendable according to respective angles formed by the plurality of parts, a first camera arranged on a surface, which faces the display, of the first part, and at least one processor electrically connected to the first sensor, the second sensor, the display, and the first camera. The at least one processor may be configured to execute a camera application associated with the first camera, and identify the positioning of the first part, based on a value acquired by the first sensor, and identify the positioning of the second part, based on a value acquired by the second sensor, and identify an angle formed by the first part and the second part, based on the identified positioning of the first part and the identified positioning of the second part, and when the angle is within a first specified angle range, display a preview image acquired by the first camera in a second display region corresponding to the second part among a display region of the display, and when the angle is within a second specified angle range, display the preview image in a first display region corresponding to the first part and the second display region among the display region of the display, and display a user interface (UI) of the camera application through the display.

In an embodiment, the at least one processor may be configured to determine relative positions of the first part and the second part, based on the identified positioning of the first part and the identified positioning of the second part, and when the first part is positioned relatively lower than the second part and the angle is within the first specified angle range, display the UI in the first display region.

In an embodiment, the at least one processor may be configured to, when the first part is positioned relatively higher than the second part and the angle is within the first specified angle range, display the UI to overlap with the preview image in the first display region.

In an embodiment, the at least one processor may be configured to, when the angle is within the second specified angle range, display the UI to overlap with the preview image in the first display region and the second display region.

In an embodiment, the at least one processor may be configured to determine whether the first part is parallel to the ground, based on the identified positioning of the first part, and when the first part is parallel to the ground, display, in the second display region, a visual object indicating that a camera angle of the first camera is substantially perpendicular to the ground.

In an embodiment, the first specified angle range may be greater than or equal to 90° and less than 170°, and the second specified angle range may be greater than or equal to 170° and less than or equal to 180°.

In an embodiment, the UI may include at least one visual object for controlling the first camera.

In an embodiment, the preview image may be acquired based on at least a portion of an image acquired by the first camera.

In an embodiment, the electronic device of an embodiment may include a second camera arranged on a surface, on which a third display region of the display corresponding to a third part among the plurality of parts is positioned, of the third part, and a third sensor arranged in the third part. The third part may be connected to the second part by a second hinge structure among the at least one hinge structure, and the at least one processor may be configured to identify the positioning of the third part, based on a value acquired by the third sensor, and identify an angle formed by the second part and the third part, based on the identified positioning of the second part and the identified positioning of the third part.

In an embodiment, the at least one processor may be further configured to recognize a face of a user of the electronic device included in an image acquired through the second camera, and after recognizing the user's face, compare a face included in the image acquired through the second camera and the recognized user's face and track the user's face, and display the UI on the display, based on whether the user's face is being tracked.

In an embodiment, the at least one processor may be configured to, when the angle formed by the second part and the third part is within the first specified angle range, and the user's face is not being tracked through the second camera, and the angle formed by the first part and the second part is within the second specified angle range, display the user interface (UI) to overlap with the preview image in the first display region and the second display region.

In an embodiment, the at least one processor may be configured to identify a direction that a first edge positioned opposite the first hinge structure and farthest from the first hinge structure among edges of the first part faces, based on the identified positioning of the first part, and display the UI on the display, based on the identifying of the direction that the first edge faces.

In an embodiment, the at least one processor may be configured to, when the angle formed by the second part and the third part is within the first specified angle range, and the user's face is not being tracked through the second camera, and the angle formed by the first part and the second part is within the first specified angle range, and the direction that the first edge faces is a ground direction, display the UI in the first display region.

In an embodiment, the at least one processor may be configured to, when the angle formed by the second part and the third part is within the first specified angle range, and the user's face is not being tracked through the second camera, and the angle formed by the first part and the second part is within the second specified angle range, and the direction that the first edge faces is opposite to the ground, display the preview image displayed in the first display region and the second display region, only in the second display region, and display the UI to overlap with the preview image in the second display region.

In an embodiment, the at least one processor may be configured to, while the preview image and the UI are displayed in the second display region, display a visual object indicating that a display region of the display displaying the UI is changed when the second part and the third part are unfolded, in the second display region.

In an embodiment, the at least one processor may be configured to, when the angle formed by the second part and the third part is within the second specified angle range and the angle formed by the first part and the second part is within the specified angle range, display the preview image, which is being displayed in the first display region and the second display region, in the first display region, the second display region, and the third display region, and display the UI to overlap with the preview image in the first display region, the second display region, and the third display region.

In an embodiment, the at least one processor may be configured to identify a direction that a first edge positioned opposite the first hinge structure and farthest from the first hinge structure among edges of the first part faces, based on the identified positioning of the first part, and when the angle formed by the second part and the third part is within the second specified angle range, and the angle formed by the first part and the second part is within the first specified angle range, and the direction that the first edge faces is the ground, change and display the preview image, which is displayed in the second display region, in the first display region and the second display region, and display the UI in the third display region.

In an embodiment, the at least one processor may be configured to identify a direction that a first edge positioned opposite the first hinge structure and farthest from the first hinge structure among edges of the first part faces, based on the identified positioning of the first part, and when the angle formed by the second part and the third part is within the second specified angle range, and the angle formed by the first part and the second part is within the first specified angle range, and the direction that the first edge faces is a direction opposite to the ground, change and display the preview image, which is displayed in the second display region, in the second display region and the third display region, and display the UI to overlap with the preview image in the second display region and the third display region.

In an embodiment, the first sensor, the second sensor, and the third sensor may include at least one of a gyro sensor and an acceleration sensor.

An electronic device of an embodiment may include a housing including a first part, a second part, a third part, a first hinge structure connecting the first part and the second part, and a second hinge structure connecting the second part and the third part, at least one sensor arranged within the housing, a flexible display arranged in a space formed by the housing, a first camera arranged on a surface, which faces the flexible display, of the first part, a second camera arranged on a surface, on which the flexible display is arranged, of the third part, and at least one processor electrically connected to the at least one sensor, the display, the first camera, and the second camera. The at least one processor may be configured to execute a camera application associated with the first camera, and identify whether an angle formed by the second part and the third part is within a first specified angle range, based on a value acquired by the at least one sensor, and recognize a face of a user of the electronic device through the second camera, and after the recognition, compare a face included in an image acquired through the second camera and the recognized user's face, thereby tracking the user's face, and display a preview image acquired by the first camera in a region of the display corresponding to the third part, based on the identifying and the tracking, and display a user interface (UI) of the camera application to overlap with the preview image in the region of the display.

In the aforementioned concrete embodiments of the present disclosure, components included in the disclosure have been expressed in the singular or plural according to concrete embodiments presented. However, the singular or plural expression is selected appropriately for context presented for description convenience's sake, and the present disclosure is not limited to the singular or plural component, and even if the component is expressed in the plural, it is composed of the singular, or even if the component is expressed in the singular, it may be composed of the plural.

Meanwhile, although concrete embodiments have been described in a detailed description of the present disclosure, it is undoubted that various modifications are possible without departing from the scope of the present disclosure. Therefore, the scope of the present disclosure should not be limited to the described embodiments and should be defined by claims described below.

## Claims

1. An electronic device (101) comprising:
a housing (210) comprising a plurality of parts and at least one connection part connecting the plurality of parts, a first connection part (213) among the at least connection part being arranged between a first part (211) and a second part (212) among the plurality of parts and connecting the first part (211) to the second part (212);
a first sensor disposed in the first part (211);
a second sensor disposed in the second part (212);
a display (160) disposed in a space formed by the housing (210) and bendable according to respective angles formed by the plurality of parts;
a first camera disposed in a rear surface of the first part (211); and
at least one processor (120) electrically connected to the first sensor, the second sensor, the display (160), and the first camera,
wherein the at least one processor (120) is configured to:
execute a camera application associated with the first camera;
identify a positioning of the first part (211), based on a value acquired by the first sensor;
identify a positioning of the second part (212), based on a value acquired by the second sensor;
identify an angle formed by the first part (211) and the second part (212), based on the identified positioning of the first part (211) and the identified positioning of the second part (212);
when the identified angle is within a first specified angle range, display a preview image acquired by the first camera in a second display region (162) corresponding to the second part (212) among a plurality of display regions of the display (160);
when the identified angle is within a second specified angle range, display the preview image in a first display region (161) corresponding to the first part (211) and the second display region (162) among the plurality of display regions of the display (160);
the electronic device (101) **characterised in that** the at least one processor (120) is further configured to:
determine relative positions of the first part (211) and the second part (212), based on the identified positioning of the first part (211) and the identified positioning of the second part (212);
when the first part (211) is positioned relatively lower than the second part (212) with respect to a ground and the angle is within the first specified angle range, display a user interface, UI, controlling the camera application in the first display region (161); and
when the first part (211) is positioned relatively higher with respect to the ground than the second part (212) and the angle is within the first specified angle range, display the UI controlling the camera application to overlap with the preview image in the second display region (162).

2. The electronic device (101) of claim 1, wherein the at least one processor (120) is configured to,
when the angle is within the second specified angle range, display the UI to overlap with the preview image in the first display region (161) and the second display region (162).

3. The electronic device (101) of claim 1, wherein the at least one processor (120) is configured to:
determine whether the first part (211) is parallel to the ground, based on the identified positioning of the first part (211); and
when the first part (211) is parallel to the ground, display, in the second display region (162), a visual object indicating that a camera angle of the first camera is substantially perpendicular to the ground.

4. The electronic device (101) of claim 1, wherein the first specified angle range is greater than or equal to 90° and less than 170°, and
the second specified angle range is greater than or equal to 170° and less than or equal to 180°.

5. The electronic device (101) of claim 1, wherein the UI includes at least one visual object for controlling the first camera.

6. The electronic device (101) of claim 1, wherein the preview image is acquired based on at least a portion of an image acquired by the first camera.

7. The electronic device (101) of claim 1, comprising:
a second camera disposed on a surface, on which a third display region (163) of the display (160) corresponding to a third part among the plurality of parts is positioned, of the third part; and
a third sensor disposed in the third part,
wherein the third part is connected to the second part (212) by a second connection part among the at least one connection parts, and
the at least one processor (120) is configured to:
identify a positioning of the third part, based on a value acquired by the third sensor; and
identify an angle formed by the second part (212) and the third part, based on the identified positioning of the second part (212) and the identified positioning of the third part.

8. The electronic device (101) of claim 7, wherein the at least one processor (120) is further configured to:
recognize a face of a user of the electronic device (101) comprised in an image acquired through the second camera;
after recognizing the user's face, compare a face comprised in the image acquired through the second camera and the recognized user's face and track the user's face; and
display the UI on the display (160), based on whether the user's face is being tracked.

9. The electronic device (101) of claim 8, wherein the at least one processor (120) is configured to:
when the angle formed by the second part (212) and the third part is within the first specified angle range, and the user's face is not being tracked through the second camera, and the angle formed by the first part (211) and the second part (212) is within the second specified angle range,
display the user interface, UI, to overlap with the preview image in the first display region (161) and the second display region (162).

10. The electronic device (101) of claim 8, wherein the at least one processor (120) is configured to:
identify a direction that a first edge positioned opposite the first connection part (213) and farthest from the first connection part (213) among edges of the first part (211) faces, based on the identified positioning of the first part (211); and
display the UI on the display (160), based on the identified direction that the first edge faces.

11. The electronic device (101) of claim 10, wherein the at least one processor (120) is configured to,
when the angle formed by the second part (211) and the third part is within the first specified angle range, and the user's face is not being tracked through the second camera, and the angle formed by the first part (211) and the second part (212) is within the first specified angle range, and the direction that the first edge faces is a ground direction,
display the UI in the first display region (161).

12. The electronic device (101) of claim 10, wherein the at least one processor (120) is configured to:
when the angle formed by the second part (212) and the third part is within the first specified angle range, and the user's face is not being tracked through the second camera, and the angle formed by the first part (211) and the second part (212) is within the second specified angle range, and the direction that the first edge faces is opposite to the ground,
display the preview image displayed in the first display region (161) and the second display region (162), only in the second display region (162), and display the UI to overlap with the preview image in the second display region (162).

## Patentansprüche

1. Elektronische Vorrichtung (101), umfassend:
ein Gehäuse (210), das eine Vielzahl von Teilen und mindestens einen Verbindungsteil umfasst, der die Vielzahl von Teilen verbindet, wobei ein erster Verbindungsteil (213) aus dem mindestens einen Verbindungsteil zwischen einem ersten Teil (211) und einem zweiten Teil (212) aus der Vielzahl von Teilen positioniert ist und den ersten Teil (211) mit dem zweiten Teil (212) verbindet;
einen ersten Sensor, der in dem ersten Teil (211) angeordnet ist;
einen zweiten Sensor, der in dem zweiten Teil (212) angeordnet ist;
eine Anzeige (160), die in einem Raum angeordnet ist, der durch das Gehäuse (210) gebildet ist, und gemäß jeweiligen Winkeln, die durch die Vielzahl von Teilen gebildet sind, biegbar ist;
eine erste Kamera, die in einer rückwärtigen Oberfläche des ersten Teils (211) angeordnet ist; und
mindestens einen Prozessor (120), der elektrisch mit dem ersten Sensor, dem zweiten Sensor, der Anzeige (160) und der ersten Kamera verbunden ist,
wobei der mindesten eine Prozessor (120) zu Folgendem konfiguriert ist:
Ausführen einer Kameraanwendung, die der ersten Kamera zugeordnet ist;
Identifizieren einer Positionierung des ersten Teils (211), basierend auf einem Wert, der durch den ersten Sensor erfasst wird;
Identifizieren einer Positionierung des zweiten Teils (212) basierend auf einem Wert, der durch den zweiten Sensor erfasst wird;
Identifizieren eines Winkels, der durch den ersten Teil (211) und den zweiten Teil (212) gebildet ist, basierend auf der identifizierten Positionierung des ersten Teils (211) und der identifizierten Positionierung des zweiten Teils (212);
wenn der identifizierte Winkel innerhalb eines ersten festgelegten Winkelbereichs liegt, Anzeigen eines durch die erste Kamera erfassten Vorschaubilds in einer zweiten Anzeigeregion (162), die dem zweiten Teil (212) entspricht, aus einer Vielzahl von Anzeigeregionen der Anzeige (160);
wenn der identifizierte Winkel innerhalb eines zweiten festgelegten Winkelbereichs liegt, Anzeigen des Vorschaubilds in einer ersten Anzeigeregion (161), die dem ersten Teil (211) entspricht, und der zweiten Anzeigeregion (162) aus der Vielzahl von Anzeigeregionen der Anzeige (160);
wobei die elektronische Vorrichtung (101) **dadurch gekennzeichnet ist, dass** der mindestens eine Prozessor (120) ferner zu Folgendem konfiguriert ist:
Bestimmen relativer Positionen des ersten Teils (211) und des zweiten Teils (212) basierend auf der identifizierten Positionierung des ersten Teils (211) und der identifizierten Positionierung des zweiten Teils (212);
wenn der erste Teil (211) relativ tiefer als der zweite Teil (212) in Bezug auf einen Boden positioniert ist und der Winkel innerhalb des ersten festgelegten Winkelbereichs liegt, Anzeigen einer Benutzerschnittstelle, UI, die die Kameraanwendung in der ersten Anzeigeregion (161) steuert; und
wenn der erste Teil (211) relativ höher als der zweite Teil (212) in Bezug auf den Boden positioniert ist und der Winkel innerhalb des ersten festgelegten Winkelbereichs liegt, Anzeigen der UI, die die Kameraanwendung steuert, sodass sie mit dem Vorschaubild in der zweiten Anzeigeregion (162) überlappt.

2. Elektronische Vorrichtung (101) nach Anspruch 1, wobei der mindestens eine Prozessor (120) zu Folgendem konfiguriert ist:
wenn der Winkel innerhalb des zweiten festgelegten Winkelbereichs liegt, Anzeigen der UI, sodass sie mit dem Vorschaubild in der ersten Anzeigeregion (161) und der zweiten Anzeigeregion (162) überlappt.

3. Elektronische Vorrichtung (101) nach Anspruch 1, wobei der mindestens eine Prozessor (120) zu Folgendem konfiguriert ist:
Bestimmen, ob der erste Teil (211) parallel zum Boden ist, basierend auf der identifizierten Positionierung des ersten Teils (211); und
wenn der erste Teil (211) parallel zum Boden ist, Anzeigen eines visuellen Objekts, das angibt, dass ein Kamerawinkel der ersten Kamera im Wesentlichen senkrecht zum Boden ist, in der zweiten Anzeigeregion (162).

4. Elektronische Vorrichtung (101) nach Anspruch 1, wobei der erste festgelegte Winkelbereich größer als oder gleich 90° und kleiner als 170° ist und
der zweite festgelegte Winkelbereich größer als oder gleich 170° und kleiner als oder gleich 180° ist.

5. Elektronische Vorrichtung (101) nach Anspruch 1, wobei die UI mindestens ein visuelles Objekt zum Steuern der ersten Kamera enthält.

6. Elektronische Vorrichtung (101) nach Anspruch 1, wobei das Vorschaubild basierend auf mindestens einem Abschnitt eines durch die erste Kamera erfassten Bilds erfasst wird.

7. Elektronische Vorrichtung (101) nach Anspruch 1, umfassend:
eine zweite Kamera, die auf einer Oberfläche des dritten Teils angeordnet ist, auf der eine dritte Anzeigeregion (163) der Anzeige (160), die einem dritten Teil aus der Vielzahl von Teilen entspricht, positioniert ist; und
einen dritten Sensor, der in dem dritten Teil angeordnet ist,
wobei der dritte Teil mit dem zweiten Teil (212) durch einen zweiten Verbindungsteil aus dem mindestens einen Verbindungsteil verbunden ist und
der mindestens eine Prozessor (120) zu Folgendem konfiguriert ist:
Identifizieren einer Positionierung des dritten Teils basierend auf einem Wert, der durch den dritten Sensor erfasst wird; und
Identifizieren eines Winkels, der durch den zweiten Teil (212) und den dritten Teil gebildet ist, basierend auf der identifizierten Positionierung des zweiten Teils (212) und der identifizierten Positionierung des dritten Teils.

8. Elektronische Vorrichtung (101) nach Anspruch 7, wobei der mindestens eine Prozessor (120) ferner zu Folgendem konfiguriert ist:
Erkennen eines Gesichts eines Benutzers der elektronischen Vorrichtung (101), das in einem durch die zweite Kamera erfassten Bild umfasst ist;
nach dem Erkennen des Gesichts des Benutzers Vergleichen eines Gesichts, das in dem Bild umfasst ist, das durch die zweite Kamera erfasst wurde, und des erkannten Gesichts des Benutzers und Verfolgen des Gesichts des Benutzers; und
Anzeigen der UI auf der Anzeige (160), basierend darauf, ob das Gesicht des Benutzers verfolgt wird.

9. Elektronische Vorrichtung (101) nach Anspruch 8, wobei der mindestens eine Prozessor (120) zu Folgendem konfiguriert ist:
wenn der Winkel, der durch den zweiten Teil (212) und den dritten Teil gebildet ist, innerhalb des ersten festgelegten Winkelbereichs liegt und das Gesicht des Benutzers nicht durch die zweite Kamera verfolgt wird und der Winkel, der durch den ersten Teil (211) und den zweiten Teil (212) gebildet ist, innerhalb des zweiten festgelegten Winkelbereichs liegt,
Anzeigen der Benutzerschnittstelle, UI, sodass sie mit dem Vorschaubild in der ersten Anzeigeregion (161) und der zweiten Anzeigeregion (162) überlappt.

10. Elektronische Vorrichtung (101) nach Anspruch 8, wobei der mindestens eine Prozessor (120) zu Folgendem konfiguriert ist:
Identifizieren einer Richtung, in die eine erste Kante, die gegenüber dem ersten Verbindungsteil (213) und aus Kanten des ersten Teils (211) am weitesten von dem ersten Verbindungsteil (213) entfernt ist, weist, basierend auf der identifizierten Positionierung des ersten Teils (211); und
Anzeigen der UI auf der Anzeige (160), basierend auf der identifizierten Richtung, in die die erste Kante weist.

11. Elektronische Vorrichtung (101) nach Anspruch 10, wobei der mindestens eine Prozessor (120) zu Folgendem konfiguriert ist,
wenn der Winkel, der durch den zweiten Teil (211) und den dritten Teil gebildet ist, innerhalb des ersten festgelegten Winkelbereichs liegt und das Gesicht des Benutzers nicht durch die zweite Kamera verfolgt wird und der Winkel, der durch den ersten Teil (211) und den zweiten Teil (212) gebildet ist, innerhalb des ersten festgelegten Winkelbereichs liegt und die Richtung, in die die erste Kante weist, eine Bodenrichtung ist,
Anzeigen der UI in der ersten Anzeigeregion (161).

12. Elektronische Vorrichtung (101) nach Anspruch 10, wobei der mindestens eine Prozessor (120) zu Folgendem konfiguriert ist:
wenn der Winkel, der durch den zweiten Teil (212) und den dritten Teil gebildet ist, innerhalb des ersten festgelegten Winkelbereichs liegt und das Gesicht des Benutzers nicht durch die zweite Kamera verfolgt wird und der Winkel, der durch den ersten Teil (211) und den zweiten Teil (212) gebildet ist, innerhalb des zweiten festgelegten Winkelbereichs liegt und die Richtung, in die die erste Kante weist, entgegengesetzt zu der Bodenrichtung ist,
Anzeigen des Vorschaubilds, das in der ersten Anzeigeregion (161) und der zweiten Anzeigeregion (162) angezeigt wird, nur in der zweiten Anzeigeregion (162) und Anzeigen der UI, sodass sie mit dem Vorschaubild in der zweiten Anzeigeregion (162) überlappt.

## Revendications

1. Dispositif électronique (101) comprenant :
un boîtier (210) comprenant une pluralité de pièces et au moins une pièce de liaison reliant la pluralité de pièces, une première pièce de liaison (213) parmi la pièce de liaison au moins étant agencée entre une première pièce (211) et une deuxième pièce (212) parmi la pluralité de pièces et reliant la première pièce (211) à la deuxième pièce (212) ;
un premier capteur disposé dans la première pièce (211) ;
un deuxième capteur disposé dans la deuxième pièce (212) ;
un dispositif d'affichage (160) disposé dans un espace formé par le boîtier (210) et pouvant être plié selon des angles respectifs formés par la pluralité de pièces ;
une première caméra disposée dans une surface arrière de la première pièce (211) ; et
au moins un processeur (120) relié électriquement au premier capteur, au deuxième capteur, au dispositif d'affichage (160) et à la première caméra,
dans lequel l'au moins un processeur (120) est configuré pour :
exécuter une application de caméra associée à la première caméra ;
identifier un positionnement de la première pièce (211), sur la base d'une valeur acquise par le premier capteur ;
identifier un positionnement de la deuxième pièce (212), sur la base d'une valeur acquise par le deuxième capteur ;
identifier un angle formé par la première pièce (211) et la deuxième pièce (212), sur la base du positionnement identifié de la première pièce (211) et du positionnement identifié de la deuxième pièce (212) ;
lorsque l'angle identifié se situe dans une première plage d'angle spécifiée, afficher une image de prévisualisation acquise par la première caméra dans une deuxième zone d'affichage (162) correspondant à la deuxième pièce (212) parmi une pluralité de zones d'affichage du dispositif d'affichage (160) ;
lorsque l'angle identifié se situe dans une seconde plage d'angles spécifiée, afficher l'image de prévisualisation dans une première zone d'affichage (161) correspondant à la première pièce (211) et la deuxième zone d'affichage (162) parmi la pluralité de zones d'affichage du dispositif d'affichage (160) ;
le dispositif électronique (101) étant **caractérisé en ce que** l'au moins un processeur (120) est en outre configuré pour :
déterminer des positions relatives de la première pièce (211) et de la deuxième pièce (212), sur la base du positionnement identifié de la première pièce (211) et du positionnement identifié de la deuxième pièce (212) ;
lorsque la première pièce (211) est positionnée relativement plus bas que la deuxième pièce (212) par rapport à un sol et que l'angle se situe dans la première plage d'angle spécifiée, afficher une interface utilisateur, UI, commandant l'application de caméra dans la première zone d'affichage (161) ; et
lorsque la première pièce (211) est positionnée relativement plus haut par rapport au sol que la deuxième pièce (212) et que l'angle se situe dans la première plage d'angle spécifiée, afficher l'UI commandant l'application de caméra pour qu'elle chevauche l'image de prévisualisation dans la deuxième zone d'affichage (162).

2. Dispositif électronique (101) de la revendication 1, dans lequel l'au moins un processeur (120) est configuré pour,
lorsque l'angle se situe dans la deuxième plage d'angle spécifiée, afficher l'UI pour chevaucher l'image de prévisualisation dans la première zone d'affichage (161) et la deuxième zone d'affichage (162).

3. Dispositif électronique (101) de la revendication 1, dans lequel l'au moins un processeur (120) est configuré pour :
déterminer si la première pièce (211) est parallèle au sol, sur la base du positionnement identifié de la première pièce (211) ; et
lorsque la première pièce (211) est parallèle au sol, afficher, dans la deuxième zone d'affichage (162), un objet visuel indiquant qu'un angle de caméra de la première caméra est sensiblement perpendiculaire au sol.

4. Dispositif électronique (101) de la revendication 1, dans lequel la première plage d'angle spécifiée est supérieure ou égale à 90° et inférieure à 170°, et
la seconde plage d'angle spécifiée est supérieure ou égale à 170° et inférieure ou égale à 180°.

5. Dispositif électronique (101) de la revendication 1, dans lequel l'UI comprend au moins un objet visuel pour commander la première caméra.

6. Dispositif électronique (101) de la revendication 1, dans lequel l'image de prévisualisation est acquise sur la base d'au moins une pièce d'une image acquise par la première caméra.

7. Dispositif électronique (101) de la revendication 1, comprenant :
une seconde caméra disposée sur une surface, sur laquelle une troisième zone d'affichage (163) du dispositif d'affichage (160) correspondant à une troisième pièce parmi la pluralité de pièces est positionnée, de la troisième pièce ; et
un troisième capteur disposé dans la troisième pièce,
dans lequel la troisième pièce est reliée à la deuxième pièce (212) par une deuxième pièce de liaison parmi les au moins une pièces de liaison, et
l'au moins un processeur (120) est configuré pour :
identifier un positionnement de la troisième pièce, sur la base d'une valeur acquise par le troisième capteur ; et
identifier un angle formé par la deuxième pièce (212) et la troisième pièce, sur la base du positionnement identifié de la deuxième pièce (212) et du positionnement identifié de la troisième pièce.

8. Dispositif électronique (101) de la revendication 7, dans lequel l'au moins un processeur (120) est en outre configuré pour :
reconnaître un visage d'un utilisateur du dispositif électronique (101) compris dans une image acquise au travers de la seconde caméra ;
après avoir reconnu le visage de l'utilisateur, comparer un visage compris dans l'image acquise au travers de la seconde caméra et le visage de l'utilisateur reconnu et suivre le visage de l'utilisateur ; et
afficher l'UI sur le dispositif d'affichage (160), sur la base du fait que le visage de l'utilisateur est suivi ou non.

9. Dispositif électronique (101) de la revendication 8, dans lequel l'au moins un processeur (120) est configuré pour :
lorsque l'angle formé par la deuxième pièce (212) et la troisième pièce se situe dans la première plage d'angle spécifiée, et que le visage de l'utilisateur n'est pas suivi au travers de la seconde caméra, et que l'angle formé par la première pièce (211) et la deuxième pièce (212) se situe dans la deuxième plage d'angle spécifiée,
afficher l'interface utilisateur, UI, pour chevaucher l'image de prévisualisation dans la première zone d'affichage (161) et la deuxième zone d'affichage (162).

10. Dispositif électronique (101) de la revendication 8, dans lequel l'au moins un processeur (120) est configuré pour :
identifier une direction à laquelle fait face un premier bord positionné à l'opposé de la première pièce de liaison (213) et le plus éloigné de la première pièce de liaison (213) parmi les bords de la première pièce (211), sur la base du positionnement identifié de la première pièce (211) ; et
afficher l'UI sur le dispositif d'affichage (160), sur la base de la direction identifiée à laquelle fait face le premier bord.

11. Dispositif électronique (101) de la revendication 10, dans lequel l'au moins un processeur (120) est configuré pour,
lorsque l'angle formé par la deuxième pièce (211) et la troisième pièce se situe dans la première plage d'angle spécifiée, et que le visage de l'utilisateur n'est pas suivi au travers de la seconde caméra, et que l'angle formé par la première pièce (211) et la deuxième pièce (212) se situe dans la première plage d'angle spécifiée, et que la direction dans laquelle fait face le premier bord est une direction du sol,
afficher l'UI dans la première zone d'affichage (161).

12. Dispositif électronique (101) de la revendication 10, dans lequel l'au moins un processeur (120) est configuré pour :
lorsque l'angle formé par la deuxième pièce (212) et la troisième pièce se situe dans la première plage d'angle spécifiée, et que le visage de l'utilisateur n'est pas suivi au travers de la seconde caméra, et que l'angle formé par la première pièce (211) et la deuxième pièce (212) se situe dans la deuxième plage d'angle spécifiée, et que la direction dans laquelle fait face le premier bord est opposée au sol,
afficher l'image de prévisualisation affichée dans la première zone d'affichage (161) et la deuxième zone d'affichage (162), uniquement dans la deuxième zone d'affichage (162), et afficher l'UI pour chevaucher l'image de prévisualisation dans la deuxième zone d'affichage (162).
